# EUROPEAN PATENT SPECIFICATION

(11) **EP 1 956 054 B1**
(45) Date of publication and mention of the grant of the patent: **24.11.2010**
(21) Application number: 08150833.5
(22) Date of filing: 30.01.2008
(51) Int. Cl.: C09B 69/06, C09D 11/00, C09B 11/14

(54) **Phase change ink**
Phasenwechseltinte
Encre à changement de phase

(30) Priority: 06.02.2007 US 702890
(43) Date of publication of application: 13.08.2008
(73) Proprietor: Xerox Corporation, Rochester, New York 14644 (US)
(72) Inventor: Banning, Jeffrey, H., Hillsboro, OR 97124 (US)
(74) Representative: Grünecker, Kinkeldey, Stockmair & Schwanhäusser Anwaltssozietät

(56) References cited:
- EP-A- 1 493 781
- EP-A- 1 535 968
- WO-A-2005/085372
- WO-A-2006/069928
- DE-A1- 3 842 013
- DE-B- 1 298 104
- FR-A- 1 355 969
- GB-A- 882 837
- GB-A- 1 162 808
- US-A- 3 353 972
- US-A- 5 273 906
- DATABASE BEILSTEIN BEILSTEIN INSTITUTE FOR ORGANIC CHEMISTRY, FRANKFURT-MAIN, DE; XP002516789 & BAEYER ET AL.: CHEM.BER., vol. 37, 1904, page 1184,
- GNEHM R ET AL: "Zur Theorie des Färbungsprocesses" ZEITSCHRIFT FUER ANGEWANDTE CHEMIE, VERLAG CHEMIE, BERLIN, DE, vol. 11, 1 January 1898 (1898-01-01), pages 482-488, XP009109127 ISSN: 0932-2132

## Description

The present invention relates to the use of triphenylmethane dyes as colorants in hot melt or phase change inks.

In general, phase change inks (sometimes referred to as "hot melt inks") are in the solid phase at ambient temperature, but exist in the liquid phase at the elevated operating temperature of an ink jet printing device. At the jet operating temperature, droplets of liquid ink are ejected from the printing device and, when the ink droplets contact the surface of the recording substrate, either directly or via an intermediate heated transfer belt or drum, they quickly solidify to form a predetermined pattern of solidified ink drops. Phase change inks have also been used in other printing technologies, such as gravure printing, as disclosed in, for example, U.S. Patent 5,496,879 and German Patent Publications DE 4205636A1 and DE 4205713A1.

Phase change inks for color printing typically comprise a phase change ink carrier composition which is combined with a phase change ink compatible colorant. In a specific embodiment, a series of colored phase change inks can be formed by combining ink carrier compositions with compatible subtractive primary colorants. The subtractive primary colored phase change inks can comprise four component dyes, namely, cyan, magenta, yellow and black, although the inks are not limited to these four colors. These subtractive primary colored inks can be formed by using a single dye or a mixture of dyes. For example, magenta can be obtained by using a mixture of Solvent Red Dyes or a composite black can be obtained by mixing several dyes. U.S. Patent 4,889,560, U.S. Patent 4,889,761, and U.S. Patent 5,372,852 teach that the subtractive primary colorants employed can comprise dyes from the classes of Color Index (C.I.) Solvent Dyes, Disperse Dyes, modified Acid and Direct Dyes, and Basic Dyes. The colorants can also include pigments, as disclosed in, for example. U.S. Patent 5,221,335. U.S. Patent 5,621,022 discloses the use of a specific class of polymeric dyes in phase change ink compositions.

Phase change inks have also been used for applications such as postal marking, industrial marking, and labeling. Phase change inks are desirable for ink jet printers because they remain in a solid phase at room temperature during shipping, long term storage, and the like. In addition, the problems associated with nozzle clogging as a result of ink evaporation with liquid ink jet inks are largely eliminated, thereby improving the reliability of the ink jet printing. Further, in phase change ink jet printers wherein the ink droplets are applied directly onto the final recording substrate (for example, paper, transparency material, and the like), the droplets solidify immediately upon contact with the substrate, so that migration of ink along the printing medium is prevented and dot quality is improved.

Compositions suitable for use as phase change ink carrier compositions are known. Some representative examples of references disclosing such materials include U.S. Patent 3,653,932, U.S. Patent 4,390,369, U.S. Patent 4,484,948, U.S. Patent 4,684,956, U.S. Patent 4,851,045, U.S. Patent 4,889,560, U.S. Patent 5,006,170, U.S. Patent 5,151,120, U.S. Patent 5,372,852, U.S. Patent 5,496,879, European Patent Publication 0187352, European Patent Publication 0206286, German Patent Publication DE 4205636A1, German Patent Publication DE 4205713A1, and PCT Patent Application WO 94/04619. Suitable carrier materials can include paraffins, microcrystalline waxes, polyethylene waxes, ester waxes, fatty acids and other waxy materials, fatty amide containing materials, sulfonamide materials, resinous materials made from different natural sources (tall oil rosins and rosin esters, for example), and many synthetic resins, oligomers, polymers, and copolymers.

While known compositions and processes are suitable for their intended purposes, a need remains for new colorant compositions for making composite black and other colors (for example, green). EP-A-1493781 discloses dye derivatives and their use in phase change inks. The dye derivatives are selected from rhodamines, sulforhodamines, acridines, and anthracenes.

The object of the present invention is to provide hot melt or phase change inks for generating high quality images. This object is solved by the use of a compound having the following formula as colorant in a hot melt or phase change ink 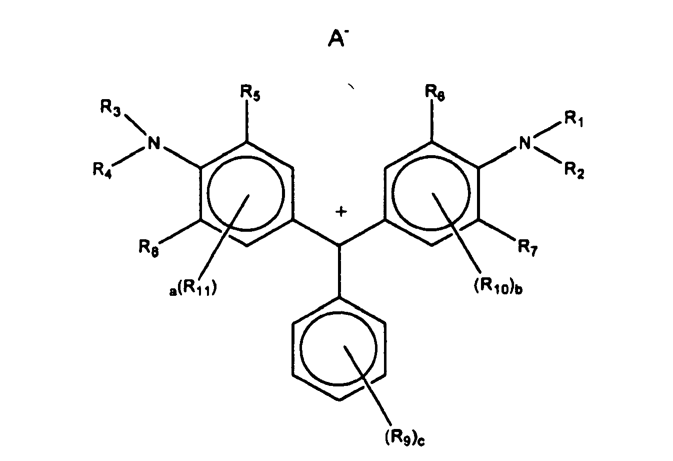 wherein R₁, R₂, R₃, and R₄, each, independently of the others, is (i) a hydrogen atom, (ii) an alkyl group, (iii) an aryl group, (iv) an arylalkyl group, or (v) an alkylaryl group, wherein R₁ and R₂ can be joined together to form a ring, wherein R₃ and R₄ can be joined together to form a ring, wherein R₅, R₆, R₇, and R₈, each, independently of the others, is (i) a hydrogen atom, (ii) an alkyl group, (iii) an aryl group, (iv) an arylalkyl group, or (v) an alkylaryl group, wherein R₅ and R₆ can be joined together to form a ring, and wherein R₁, R₂, R₃, R₄, R₅, and R₆ can each be joined to a phenyl ring in the central structure, wherein R₉, R₁₀, and R₁₁, are each independently of the others optionally included and wherein if included each R₉, R₁₀, and R₁₁, independently of the others, is (i) a hydroxy group, (ii) a halogen atom, (iii) an amine group, (iv) an imine group, (v) an ammonium group, (vi) a cyano group, (vii) a pyridine group, (viii) a pyridinium group, (ix) an ether group, (x) an aldehyde group, (xi) a ketone group, (xii) an ester group, (xiii) an amide group, (xiv) a carbonyl group, (xv) a thiocarbonyl group, (xvi) a sulfoxide group, (xvii) a nitrile group, (xviii) a mercapto group, (xix) a nitro group, (xx) a nitroso group, (xxi) a sulfone group, (xxii) an acyl group, (xxiii) an acid anhydride group, (xxiv) an azide group, (xxv) an azo group, (xxvi) a cyanato group, (xxvii) an isocyanato group, (xxviii) a thiocyanato group, (xxix) an isothiocyanato group, (xxx) a urethane group, (xxxi) a urea group, or a mixture or combination thereof, wherein two or more substituents can be joined together to form a ring, wherein R₉, R₁₀, and R₁₁ can each be joined to a phenyl ring in the central structure;
wherein a, b and c each, independently of the others, is an integer which is 0, 1, 2, or 3; and wherein A⁻ is a waxy counter ion comprising a waxy moiety.

Preferred embodiments of the invention are set forth in the sub-claims.

The present disclosure is directed to the use of a composition comprising a specific basic dye component; and a counter ion comprising a waxy moiety. As used herein, the term waxy counter ion comprising a waxy moiety means a counter ion having a waxy moiety including a sufficient number of carbon atoms to be soluble in hot melt or phase change ink vehicles (hot melt ink vehicles typically comprising a wax).

The present disclosure is directed to the use of specific triphenyl methane dye compositions having a waxy counter ion. As used herein, the term waxy counter ion means a counter ion having a waxy moiety including a sufficient number of carbon atoms in the alkyl portion to be soluble in hot melt or phase change ink vehicles (hot melt ink vehicles typically comprising a wax). For example, in embodiments, a waxy moiety herein is an alkyl group having from 4 to 150 carbon atoms. For example, in embodiments, a waxy moiety herein is an alkyl group having 4, 5, 6, 7, 8, 9, 10, 12, 16, or 18 carbon atoms, or 30 to 150 carbon atoms, an alkylaryl group having 4, 5, 6, 7, 8, 9, 10, 12, 16, or 18 carbon atoms, or 30 to 150 carbon atoms, or an arylalkyl group having 4, 5, 6, 7, 8, 9, 10, 12, 16, or 18 carbon atoms, or 30 to 150 carbon atoms.

In embodiments, a waxy moiety herein is an aryl group having 6 to 20 carbon atoms, or 6 to 12 carbon atoms. In embodiments, the ratio of alkyl carbon atoms to aryl carbon atoms in the waxy moiety is 10 carbon atoms to 1 carbon atom, or 2 carbon atoms to 1 carbon atom.

In the formula

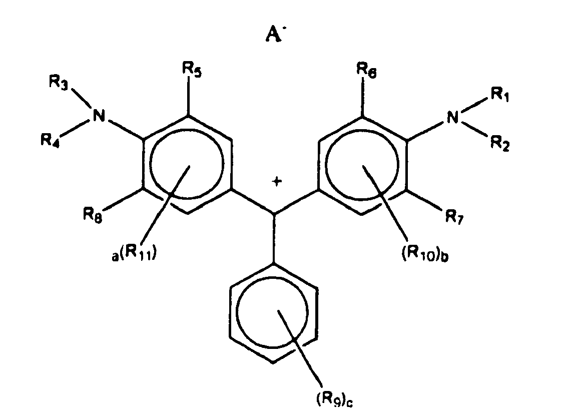

R₁, R₂, R₃, R₄, R₅, R₆, R₇, and R₈ each, independently of the others, is (i) a hydrogen atom, (ii) an alkyl group (including linear, branched, saturated, unsaturated, cyclic, substituted, and unsubstituted alkyl groups, and wherein hetero atoms, such as oxygen, nitrogen, sulfur, silicon, boron, phosphorus, and the like either may or may not be present in the alkyl group), in one embodiment with at least 1 carbon atom, in another embodiment with at least 2 carbon atoms, in yet another embodiment with at least 6 carbon atoms, in another embodiment with at least 8 carbon atoms, and in yet another embodiment with at least 18 carbon atoms, and in one embodiment with no more than 55 carbon atoms, in another embodiment with no more than 30 carbon atoms, and in yet another embodiment with no more than 20 carbon atoms, although the number of carbon atoms can be outside of these ranges, (iii) an aryl group (including unsubstituted and substituted aryl groups, and wherein hetero atoms, such as oxygen, nitrogen, sulfur, silicon, phosphorus, and the like either may or may not be present in the aryl group), in one embodiment with at least 6 carbon atoms, in another embodiment with at least 10 carbon atoms, and in yet another embodiment with at least 14 carbon atoms, and in one embodiment with no more than 26 carbon atoms, in another embodiment with no more than 22 carbon atoms, and in yet another embodiment with no more than 18 carbon atoms, although the number of carbon atoms can be outside of these ranges, (iv) an arylalkyl group, (including unsubstituted and substituted arylalkyl groups, wherein the alkyl portion of the arylalkyl group can be linear, branched, saturated, unsaturated, and/or cyclic, and wherein hetero atoms, such as oxygen, nitrogen, sulfur, silicon, phosphorus, and the like either may or may not be present in either or both of the alkyl portion and the aryl portion of the arylalkyl group), in one embodiment with at least 7 carbon atoms, in another embodiment with at least 12 carbon atoms, and in yet another embodiment with at least 18 carbon atoms, and in one embodiment with no more than 55 carbon atoms, in another embodiment with no more than 30 carbon atoms, and in yet another embodiment with no more than 20 carbon atoms, although the number of carbon atoms can be outside of these ranges, such as benzyl or the like or (v) an alkylaryl group, (including unsubstituted and substituted alkylaryl groups, wherein the alkyl portion of the alkylaryl group can be linear, branched, saturated, unsaturated, and/or cyclic, and wherein hetero atoms, such as oxygen, nitrogen, sulfur, silicon, phosphorus, and the like either may or may not be present in either or both of the alkyl portion and the aryl portion of the alkylaryl group), in one embodiment with at least 7 carbon atoms, in another embodiment with at least 12 carbon atoms, and in yet another embodiment with at least 18 carbon atoms, and in one embodiment with no more than 55 carbon atoms, in another embodiment with no more than 30 carbon atoms, and in yet another embodiment with no more than 20 carbon atoms, although the number of carbon atoms can be outside of these ranges, such as tolyl or the like wherein R₁ and R₂ can be joined together to form a ring, wherein R₃ and R₄ can be joined together to form a ring, wherein R₅ and R₆ can be joined together to form a ring, and wherein R₁, R₂, R₃, R₄, R₅ and R₆ can each be joined to a phenyl ring in the central structure;
wherein R₉, R₁₀, and R₁₁, are each independently of the others optionally included and wherein if included each of R₉, R₁₀, and R₁₁, independently of the others, is a halogen atom, such as fluorine, chlorine, bromine, iodine, or the like, an ester group, an amide group, a sulfone group, an amine group or ammonium group, a nitrile group, a nitro group, a hydroxy group, a cyano group, a pyridine or pyridinium group, an ether group, an aldehyde group, a ketone group, a carbonyl group, a thiocarbonyl group, animine group, a sulfoxide group, a mercapto group, a nitroso group, an acyl group, an acid anhydride group, an azide group, an azo group, a cyanato group, an isocyanato group, a thiocyanato group, an isothiocyanato group, a urethane group, or a urea group, wherein R₉, R₁₀ and R₁₁ can each be joined to a phenyl ring in the central structure; wherein a, b and c each, independently of the others, is an integer which is 0, 1, 2, or 3; wherein A is a waxy counter ion including a sufficient number of carbon atoms in the alkyl portion to be soluble in hot melt ink vehicles (hot melt ink vehicles typically comprising a wax). For example, in embodiments, a waxy moiety herein is an alkyl group having from 4 to 150 carbon atoms. For example, in embodiments, a waxy moiety herein is an alkyl group having 4, 5, 6, 7, 8, 9, 10, 12, 16, or 18 carbon atoms, or 30 to 150 carbon atoms, an aryl group having from 6 to 20 carbon atoms or from 6 to 12 carbon atoms, an alkylaryl group having 4, 6, 7, 8, 9, 10, 12, 16, or 18 carbon atoms, or from 30 to 150 carbon atoms, or an arylalkyl group having 6, 7, 8, 9, 10, 12, 16, or 18 carbon atoms, or 30 to 150 carbon atoms. In embodiments, a waxy moiety herein is an aryl group having from 6 to 20 carbon atoms, or 6 to 12. In embodiments, the ratio of alkyl carbon atoms to aryl carbon atoms in the waxy moiety is from 10 to 1 or from 2 to 1.

In embodiments, A is a waxy organic anion. The waxy organic anion can be monomeric, oligomeric, polymeric, or the like. Examples of waxy monomeric organic anions include those of the formula R₂₀-(An)_{q} wherein q is an integer of 1, 2, 3, 4, 5, or 6, each An, independently of the others, is a carboxylic acid group, a carboxylate group (COO⁻) an organosulfate group, an organosulfonate group, an organosulfinate group, or an organophosphate group, for example, in embodiments, a sulfonic acid

R₂₀—SO₃H

a sulfonate

R₂₀—SO₃,

a sulfinic acid

R₂₀—SO₂H

a sulfinate

R₂₀—SO₃⁻,

R₂₀—O—SO₃H,

a sulfate

R₂₀—O—SO₃⁻

a phosphonic acid

R₂₀—PO₃H₂

a phosphonate

R₂₀—PO₃H⁻

a phosphinic acid

R₂₀—PO₂H

a phosphinate

R₂₀—PO₂⁻

and the like; and R₂₀ is an alkyl (when q is 1) or alkylene (when q is 2, 3, 4, 5, or 6) group (including linear, branched, saturated, unsaturated, cyclic, substituted, and unsubstituted alkyl and alkylene groups, and wherein hetero atoms, such as oxygen, nitrogen, sulfur, silicon, phosphorus, and the like either may or may not be present in the alkyl or alkylene group), in one embodiment with at least 4 carbon atoms, in another embodiment with at least 6 carbon atoms, and in another embodiment with at least 6, 7, 8, 9, 10, 12, 16, or 18 carbon atoms, in another embodiment with 30 to 150 carbon atoms, although the number of carbon atoms can be outside of these ranges provided the counter ion has sufficient carbon atoms or structure to function as a waxy counter ion providing a wax solubilizing effect to the composition in ink jet vehicles, an aryl (when q is 1) or arylene (when q is 2, 3, 4, 5, or 6) group (including unsubstituted and substituted aryl and arylene groups, and wherein hetero atoms, such as oxygen, nitrogen, sulfur, silicon, phosphorus, and the like either may or may not be present in the aryl or arylene group), in one embodiment with at least 6 carbon atoms, and in one embodiment with no more than 100 carbon atoms, in another embodiment with no more than 36 carbon atoms, and in yet another embodiment with no more than 18 carbon atoms, although the number of carbon atoms can be outside of these ranges, provided the counter ion is a waxy counter ion, an arylalkyl (when q is 1) or arylalkylene (when q is 2, 3, 4, 5, or 6) group (including unsubstituted and substituted arylalkyl or arylalkylene groups, wherein the alkyl portion of the arylalkyl or arylalkylene group can be linear, branched, saturated, unsaturated and/or cyclic, and wherein hetero atoms, such as oxygen, nitrogen, sulfur, silicon, phosphorus, and the like either may or may not be present in either or both of the alkyl portion and the aryl portion of the arylalkyl or arylalkylene group), in one embodiment with at least 7 carbon atoms, and in one embodiment with no more than 50 carbon atoms, in another embodiment with no more than 30 carbon atoms, and in yet another embodiment with no more than 20 carbon atoms, although the number of carbon atoms can be outside of these ranges, provided the counter ion is a waxy counter ion, or an alkylaryl (when q is 1) or alkylarylene (when q is 2, 3, 4, 5, or 6) group (including unsubstituted and substituted alkylaryl or alkylarylene groups, wherein the alkyl portion of the alkylaryl or alkylarylene group can be linear, branched, saturated, unsaturated, and/or cyclic, and wherein hetero atoms, such as oxygen, nitrogen, sulfur, silicon, phosphorus, and the like either may or may not be present in either or both of the alkyl portion and the aryl portion of the alkylaryl or alkylarylene group), in one embodiment with at least 6 carbon atoms, and in one embodiment with no more than 10 carbon atoms, in another embodiment with no more than 14 carbon atoms, and in yet another embodiment with no more than 22 carbon atoms, although the number of carbon atoms can be outside of these ranges provided the counter ion is a waxy counter ion, and wherein the substituents on the substituted alkyl, alkylene, aryl, arylene, arylalkyl, arylalkylene, alkylaryl, and alkylarylene groups can be (but are not limited to) hydroxy groups, halogen atoms, amine groups, imine groups, ammonium groups, cyano groups, pyridine groups, pyridinium groups, ether groups, aldehyde groups, ketone groups, ester groups, amide groups, carbonyl groups, thiocarbonyl groups, sulfate groups, sulfonate groups, sulfide groups, sulfoxide groups, phosphine groups, phosphonium groups, phosphate groups, nitrile groups, mercapto groups, nitro groups, nitroso groups, sulfone groups, acyl groups, acid anhydride groups, azide groups, azo groups, cyanato groups, isocyanato groups, thiocyanato groups, isothiocyanato groups, carboxylate groups, carboxylic acid groups, urethane groups, urea groups, mixtures thereof, and the like, wherein two or more substituents can be joined together to form a ring.

Examples of suitable waxy monomeric anions include monocarboxylic acid derived anions, such as butyrate (CH₃(CH₂)₂COO⁻), valerate (CH₃(CH₂)₃COO⁻), hexanoate (CH₃(CH₂)₄COO⁻), heptanoate (CH₃(CH₂)₅COO⁻), octanoate (CH₃(CH₂)₆COO⁻), nonanoate (CH₃(CH₂)₇COO⁻), decanoate (CH₃(CH₂)₈COO⁻), undecanoate (CH₃(CH₂)₆COO⁻), laurate (CH₃(CH₂)₁₀COO⁻), tridecanoate (CH₃(CH₂)₁₁COO⁻), myristate (CH₃(CH₂)₁₂COO⁻), pentadecanoate (CH₃(CH₂)₁₃COO⁻), palmitate (CH₃(CH₂)₁₄COO⁻), heptadecanoate (CH₃(CH₂)₁₅COO⁻), stearate (CH₃(CH₂)₁₆COO⁻), nonadecanoate (CH₃(CH₂)₁₇COO⁻), eicosanoate (CH₃(CH₂)₁₈COO⁻), heneicosanoate (CH₃(CH₂)₁₉COO⁻), docosanoate (CH₃(CH₂)₂₀COO⁻), tricosanoate (CH₃(CH₂)₂₁COO⁻), tetracosanoate (CH₃(CH₂)₂₂COO⁻), hexacosanoate (CH₃(CH₂)₂₄COO⁻), heptacosanoate (CH₃(CH₂)₂₅COO⁻), octacosanoate (CH₃(CH₂)₂₆COO⁻), triacontanoate (CH₃-(CH₂)₂₈COO⁻), isobutyrate, ethylbutyrate, trimethylacetate, 2-methylbutyrate, isovalerate, 2,2-dimethylbutyrate, tert-butylacetate, 2-methylvalerate, 2,2,6,6-tetramethyl-3,5-heptanedionate, 2-propylpentanoate, 3-methylvalerate, 4-methylvalerate, 2-methylhexanoate, 2-ethylhexanoate, pyruvate, 2-ketobutyrate, 3-methyl-2-oxobutanoate, 2-oxopentanoate, 3-methyl-2-oxopentanoate, 4-methyl-2-oxopentanoate, 2-oxohexanoic acid, 3-fluoropyruvate, 4-methylthio-2-oxobutyrate, acrylate, methacrylate, crotonate, vinylacetate, tiglate, 3,3-dimethylacrylate, trans-2-pentenoate, 4-pentenoate, trans-2-methyl-2-pentenoate, 2,2-dimethyl-4-pentenoate, trans-2-hexenoate, trans-3-hexenoate, 2-ethyl-2-hexenoate, 6-heptenoate, 2-octenoate, citronellate, undecylenate, myristoleate, palmitoleate, oleate, elaidate, 11-eicosenoate, erucate, nervonate, chloroacetate, bromoacetate, iodoacetate, difluoroacetate, dichloroacetate, dibromoacetate, trifluoroacetate, chlorodifluoroacetate, trichloroacetate, tribromoacetate, 2-chloropropionate, 3-chloropropionate, 2-bromopropionate, 3-bromopropionate, 2-iodopropionate, 3-iodopropionate, 2,2-dichloropropionate, 2,3-dibromopropionate, pentafluoropropionate. 2-bromo-2-methylpropionate, 3-bromo-2-(bromomethyl)-propionate, 3-chloropivalate, 3,3-dichloropivalate, 4-chlorobutyrate, 2-bromobutyrate, 4-bromobutyrate, heptafluorobutyrate, 2-bromo-3-methylbutyrate, 5-chlorovalerate, 2-bromovalerate, 5-bromovalerate, nonafluoropentanoate, 2-bromohexanoate, 6-bromohexanoate, tridecafluoroheptanoate, 2-bromooctanoate, 8-bromooctanoate, pentadecafluorooctanoate, heptadecafluorononanoate, nonadecafluorodecanoate, 11-bromoundecanoate, 12-bromododecanoate, perfluorododecanoate, 2-bromotetradecanoate, 2-bromohexadecanoate, 3-chloroacrylate, 2-bromoacrylate, 2-(trifluoromethyl)acrylate, 2-(bromomethyl)acrylate, 4,4,4-trifluoro-3-methyl-2-butenoate, methoxyacetate, ethoxyacetate, 3-methoxypropionate, 2-(2-methoxyethoxy)acetate, 2-[2-(methoxyethoxy)ethoxy]acetate, tetrahydro-2-furoate, tetrahydro-3-furoate, 2,3,4,6-di-O-isopropylidene-2-ketogluconate, 3-nitropropionate, 6-nitrocaproate, 12-nitrododecanoate, levulinate, 4-acetylbutyrate, 6-oxoheptanoate, 7-oxooctanoate, 4,6-dioxoheptanoate, 3,4-dihydro-2,2-dimethyl-4-oxo-2H-pyran-6-carboxylate, cyclopentanecarboxylate, cyclopentylacetate, 3-cyclopentylpropionate, 3-methyl-2,-(nitromethyl)-5-oxocyclopentaneacetate, 6,6,7,7,8,8,8-heptafluoro-2,2-dimethyl-3,5,-octanedionate, cyclohexanecarboxylate, cyclohexylacetate, dicyclohexylacetate. cyclohexanepropionate, cyclohexanebutyrate, cyclohexanepentanoate, 1-methyl-1-cyclohexanecarboxylate, 2-methyl-1-cyclohexanecarboxylate, 3-methyl-1-cyclohexanecarboxylate, 4-methyl-1-cyclohexanecarboxylate, 4-tert-butylcyclohexanecarboxylate, 4-pentylcyclohexanecarboxylate, 4-methylcyclohexaneacetate, 3-methoxycyclohexanecarboxylate, 4-methoxycyclohexanecarboxylate, cyclohexanecarboxy late, 2-norbornaneacetate, 4-pentylbicyclo[2.2.2]octane-1-carboxylate, 3-oxotricyclo[2.2.1.0(2,6)]-heptane-1-carboxylate, 3-noradamantanecarboxylate, 1-adamantanecarboxylate, 1-adamantaneacetate, 1-cyclopentene-1-carboxylate 2-cyclopentene-1-acetate, 1-cyclohexene-1-carboxylate, 1-methyl-2-cyclohexene-1-carboxylate,

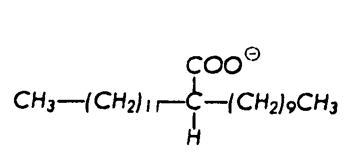

1,4-dihydro-2-methylbenzoate, retinoate, ketopinate, abietate, phenylacetate, 1-phenyl-1-cyclopentanecarboxylate, alpha-phenylcyclopentaneacetate, diphenylacetate, triphenylacetate, 2-phenylpropionate, hydrocinnamate, alpha-methylhydrocinnamate, alpha-(tert-butyl)hydrocinnamate, 2,2-diphenylpropionate, 3,3-diphenylpropionate, 3,3,3-triphenylpropionate, 2-phenylbutyrate, 3-phenylbutyrate, 4-phenylbutyrate, 5-phenylvalerate, 3-methyl-2-phenylvalerate, 6-phenylhexanoate, alpha-fluorophenylacetate, alpha-bromophenylacetate, alpha-methoxyphenylacetate, phenoxyacetate, alpha,beta-dibromohydrocinnamate, 3-phenoxypropionate, 2-phenoxypropionate, 11-phenoxyundecanoate, 2-phenoxybutyrate, alpha-methoxy-alpha-(trifluoromethyl)phenylacetate, (phenylthio)acetate, 3-(phenylthio)acrylate, benzylthioglycolate, 2-ethylthio-2,2-diphenylacetate, 3-benzoylpropionate, 2-methyl-4-oxo-4-phenylbutyrate, 4-benzoylbutyrate, o-tolylacetate, 3-oxo-1-indancarboxylate, 1,2,3,4-tetrahydro-2-naphthoate, (alpha, alpha, alpha-trifluoro-o-tolyl)acetate, 2-fluorophenylacetate, 2-chlorophenylacetate, 2-bromophenylacetate, 2-iodophenylacetate, 2-(2-chlorophenoxy)propionate, 2-methoxyphenylacetate, 3-(2-methoxyphenyl)propionate, 2-nitrophenylacetate, 2-formylphenoxyacetate, m-tolylacetate, 3-fluorophenylacetate, 3-chlorophenylacetate, 3-bromophenylacetate, 2-(3-chlorophenoxy)propionate, (alpha,alpha,alpha-trifluoro-m-tolyl)acetate, 3-methoxyphenylacetate, 3-nitrophenylacetate, p-tolylacetate, 3-(p-tolyl)propionate, (4-methylphenoxy)acetate, 4-isobutyl-alpha-methylphenylacetate, 4-acetylphenoxyacetic acid, 4-(4-chloro-o-tolyloxy)butyrate, 4-fluorophenylacetate, (alpha,alpha,alpha-trifluoro-p-tolyl)acetate, 3-(4-fluorobenzoyl)propionate, 3-(4-chlorobenzoyl)propionate, 4-chlorophenylacetate, bis(4-chlorophenyl)acetate, 4-bromophenylacetate, 3,3,3-tris(4-chlorophenyl)propionate, 4-(bromomethyl)phenylacetate, 1-(4-chlorophenyl)-1-cyclopentanecarboxylate, 4-methoxyphenylacetate, 4-ethoxyphenylacetate, 3-(4-methoxyphenyl)propionate, 4-(4-methoxyphenyl)propionate, 4-chlorophenoxyacetate, bis(4-chlorophenoxy)acetate, 4-(methylthio)-phenylacetate, 4-nitrophenylacetate, 2-(4-nitrophenyl)propionate, 4-(4-nitrophenyl)butyrate, 3-(4-methoxybenzoyl)propionate, 4-fluorophenoxyacetate, 2-(4-chlorophenoxy)propionate, 2-(4-chlorophenoxy)2-methylpropionate, (2,4-di-tert-pentylphenoxy)acetate, 2,6-difluorophenylacetate, 2,4-difluorophenylacetate, 2,5-difluorophenylacetate, 3,5-difluorophyenylacetate, 4-chloro-o-tolyloxyacetate, 2,3-dichlorophenoxyacetate, 2, 6-dichlorophenylacetate, 2,4-dichlorophenylacetate, 2,4-dichlorophenoxyacetate, 3,4-dichlorophenylacetate, 3,4-dichlorophenoxyacetate, 3,5-bis(trifluoromethyl)phenylacetate, 4-(2,4-di-tert-pentylphenoxy)butyrate, 2-(2,4-dichlorophenoxy)propionate, 4-(2,4-dichlorophenoxy)propionate, 2,4,5-trichlorophenoxyacetate, 2-(2,4,5-trichlorophenoxy)propionate, (3,4-dimethoxyphenyl)acetate, 4-benzyloxy-3-methoxyphenylacetate, 3,4-(methylenedioxy)phenylacetate, 5-methoxy-1-indanone-3-acetate, 3-(3,4-dimethoxyphenyl)propionate, 4-(3,4-dimethoxyphenyl)butyrate, (2,5-dimethoxyphenyl)acetate, 2,4-dinitrophenylacetate, (3,5-dimethoxyphenyl)acetate, 3,4,5-trimethoxyphenylacetate, 3-(3,4,5-trimethoxyphenyl)propionate, 2,3,4,5,6-pentafluorophenylacetate, 4-biphenylacetate, 1- naphthylacetate, 2-naphthylacetate, alpha-trityl-2-naphthalenepropionate, (1-naphthoxy)acetate, (2-naphthoxy)acetate, 6-methoxy-alpha-methyl-2-naphthaleneacetate, 9-fluoreneacetate, 1-pyreneacetate, 1-pyrenebutyrate, gamma-oxo-1-pyrenebutyrate, styrylacetate, cinnamate, alpha-methylcinnamate, alpha-fluorocinnamate, alpha-phenylcinnamate, 2-methylcinnamate, 2-fluorocinnamate, 2-(trifluoromethy)cinnamate, 2-chlorocinnamate, 2-methoxycinnamate, 2-nitrocinnamate, 3-fluorocinnamate, 3-(trifluoromethyl)cinnamate, 3-chlorocinnamate, 3-bromocinnamate, 3-methoxycinnamate, 3-nitrocinnamate, 4-methylcinnamate, 4-fluorocinnamate, 4-(trifluoromethyl)cinnamate, 4-chlorocinnamate, 4-bromocinnamate, 4-methoxycinnamate, 4-nitrocinnamate, 4-formylcinnamate, 2,6-difluorocinnamate, 2,4-difluorocinnamate, 2,5-difluorocinnamate, 3,4-difluorocinnamate, 3,5-difluorocinnamate, 2-chloro-6-fluorocinnamate, 2,4-dichlorocinnamate, 3,4-dichlorocinnamate, 5-bromo-2-methoxycinnamate, 2,3-dimethoxycinnamate, 2,4-dimethoxycinnamate, 2,5-dimethoxycinnamate, 3,4-dimethoxycinnamate, 3,4-(methylenedioxy)cinnamate, 3,5-dimethoxycinnamate, 2-chloro-5-nitrocinnamate, 4-chloro-3-nitrocinnamate, 2,3,4-trifluorocinnamate, 3,4,5-trimethoxycinnamate, 2,4,5-trimethoxycinnamate, alpha-methyl-2,4,5-trimethoxycinnamate, 4,5-dimethoxy-2-nitrocinnamate, 2,3,4,5,6-pentafluorocinnamate, 3-methylindene-2-carboxylate, 3-(4-methylbenzoyl)acrylate, 3-(2,5-dimethylbenzoyl)acrylate, 3-(2,3,5,6-tetramethylbenzoyl)acrylate, 3-(4-methoxybenzoyl)acrylate, 3-(4-ethoxybenzoyl)acrylate, 6-methylchromone-2-carboxylate, benzoate, o-toluate, 2-fluorobenzoate, alpha,alpha,alpha-trifluoro-o-toluate, 2-chlorobenzoate, 2-bromobenzoate, 2-iodobenzoate, o-anisate, 2-ethoxybenzoate, 2-nitrobenzoate, 2-acetylbenzoate, 2-(p-toluoyl)benzoate, m-toluate, 3-fluorobenzoate, alpha,alpha,alpha-trifluoro-m-toluate, 3-chlorobenzoate, 3-(chloromethyl)benzuate, 3-bromobenzoate, 3-iodobenzoate, m-anisate, 3-nitrobenzoate, p-toluate, 4-ethylbenzoate, 4-n-propylbenzoate, 4-isopropylbenzoate, 4-n-butylbenzoate, 4-tert-butylbenzoate, 4-pentylbenzoate, 4-hexylbenzuate, 4-heptylbenzoate, 4-octylbenzoate, 4-vinylbenzoate, 4-fluorobenzoate, alpha,alpha,alpha-trifluoro-o-toluate, 4-chlorobenzoate, 4-bromobenzoate, 4-iodobenzoate, 4-(chloromethyl)benzoate, alpha-bromo-p-toluate, p-anisate, 4-(trifluoromethoxy)benzoate, 4-ethoxybenzoate, 4-n-propoxybenzoate, 4-butoxybenzoate, 4-pentyloxybenzoate, 4-hexyloxybenzoate, 4-heptyloxybenzoate, 4-octyloxybenzoate, 4-nonyloxybenzoate, 4-decyloxybenzoate, 4-nonyloxybenzoate, 4-dodecyloxybenzoate, 4-isopropoxybenzoate, 4-(2-cyclohexenyloxy)benzoate, 4-(methylthio)benzoate, 4-(ethylthio)benzoate, 4-nitrobenzoate, 4-acetylbenzoate, 2,3-dimethylbenzoate, 2,6-dimethylbenzoate, 3-fluoro-2-methylbenzoate, 2,3-difluorobenzoate, 2,6-difluorobenzoate, 2-fluoro-6-(trifluoromethyl)benzoate, 2-fluoro-3-(trifluoromethyl)benzoate, 2,6-bis(trifluoromethyl)benzoate, 2-chloro-6-fluorobenzoate, 2-chloro-6-fluorophenylacetate, 2,3-dichlorobenzoate, 2,6-dichlorobenzoate, 2,3-dimethoxybenzoate, 2,6-dimethoxybenzoate, 2-methyl-6-nitrobenzoate, 3-methyl-2-nitrobenzoate, 2-methyl-3-nitrobenzoate, 3-chloro-2-nitrobenzoate, 2-chloro-3-nitrobenzoate, 2-bromo-3-nitrobenzoate, 3-methoxy-2-nitrobenzoate, 3,4-dimethylbenzoate, 2,4-dimethylbenzoate, 2,5-dimethylbenzoate, 5-fluoro-2-methylbenzoate, 3-fluoro-4-methylbenzoate, 2-fluoro-5-methylbenzoate, 3-bromo-4-methylbenzoate, 2,4-bis(trifluoromethyl)benzoate, 3-iodo-4-methylbenzoate, 2-chloro-5-(trifluoromethyl)benzoate, 2,5-bis(trifluoromethyl)benzoate, 2,4-difluorobenzoate, 3,4-difluorobenzoate, 4-fluoro-2-(trifluoromethyl)benzoate, 2-fluoro-4-(trifluoromethyl)benzoate, 2-chloro-4-fluorobenzoate, 3-chloro-4-fluorubenzoate, 2.4-dichlorobenzoate, 3,4-dichlorobenzoate, 2,5-difluorobenzoate, 2,5-dichlorobenzoate, 3-bromo-4-fluorobenzoate, 5-bromo-2-chlorobenzoate. 3-methoxy-4-methylbenzoate, 3-fluoro-4-methoxybenzoate, 4-chloro-o-anisate, 5-chloro-o-anisate, 2-bromo-5-methoxybenzoate, 2,4-dimethoxybenzoate, 2,5-dimethoxybenzoate, 3,4-dimethoxybenzoate, 3,4-diethoxybenzoate, piperonylate, 2-chloro-5-(methylthio)benzoate, 2-methoxy-4-(methylthio)benzoate, 5-methyl-2-nitrobenzoate, 4-methyl-3-nitrobenzoate, 3-methyl-4-nitrobenzoate, 2-nitro-alpha,alpha,alpha-trifluoro-p-toluate, 2-fluoro-5-nitrobenzoate, 4-chloro-2-nitrobenzoate, 2-chloro-4-nitrobenzoate, 4-fluoro-3-nitrobenzoate, 4-chloro-3-nitrobenzoate, 5-chloro-2-nitrobenzoate, 2-chloro-5-nitrobenzoate, 2-bromo-5-nitrobenzoate, 4-(bromomethyl)-3-nitrobenzoate, 2-methoxy-4-nitrobenzoate, 4-methoxy-3-nitrobenzoate, 3-methoxy-4-nitrobenzoate, 5-methoxy-2-nitrobenzoate, 2,4-dinitrobenzoate, 3,5-dimethylbenzoate, 3,5-di-tert-butylbenzoate, 3,5-difluorobenzoate, 3,5-bis(trifluoromethyl)benzoate, 3,5-dichlorobenzoate, 3,5-dibromobenzoate, 3-bromo-5-iodobenzoate, 3,5-dimethoxybenzoate, 3,5-dinitrobenzoate, 2,3,4-trifluorobenzoate, 2,3,6-trifluorobenzoate, 2,4,6-trimethylbenzoate, 2,4,6-trifluorobenzoate, 3,4,5-trifluorobenzoate, 2,4,6-trichlorobenzoate, 2,3,5-trichlorobenzoate, 2,3,5-triiodobenzoate, 2-bromo-4,5-dimethoxybenzoate, 3,4,5-trimethoxybenzoate, 3,4,5-triethoxybenzoate, 4.5-dimethoxy-2-nitrobenzoate. 3,5-dinitro-o-toluate, 3,5-dinitro-p-toluate, 2-chloro-3,5-dinitrobenzoate, 4-chloro-3,5-dinitrobenzoate, 2,5-dichloro-3-nitrobenzoate, 2,6-dichloro-3-nitrobenzoate, 2,3,4-trimethoxybenzoate, 2,4,5-trifluorobenzoate, 2-chloro-4,5-difluorobenzoate, 2,4-dichloro-5-fluorobenzoate, 2,4,5-trimethoxybenzoate, 2,3,4,5-tetrafluorobenzoate, 2,3,5,6-tetrafluorobenzoate, 2,4-dichloro-3,5-dinitrobenzoate, 2,3,5,6-tetrafluoro-p-toluate, 4-bromo-2,3,5,6-tetrafluorobenzoate, pentafluorobenzoate, 2-biphenylcarboxylate, 4'-(trifluoromethyl)-2-biphenylcarboxylate, 4-biphenylcarboxylate, 4'-ethyl-4-biphenylcarboxylate, 4'-octyloxy-4-biphenylcarboxylate, alpha-phenyl-o-toluate, 2-bibenzylcarboxylate, 2,3,4,5,6-pentafluorophenoxyacetate, 2-phenoxybenzoate, 3-phenoxybenzoate, 2-benzoylbenzoate, 3-benzoylbenzoate, 4-benzoylbenzoate, 2-(4-fluorobenzoyl)benzoate, 2-(4-chlorobenzoyl)benzoate, 2-(4-chloro-3-nitrobenzoyl)benzoate, 1-naphthoate, 2-naphthoate, 4-fluoro-1-naphthoate, 2-ethoxy-1-naphthoate, 1,8-naphthalaldehydate, naphthenate, 2-biphenylenecarboxylate, gamma-oxo-5-acenaphthenebutyrate, 9-fluorenecarboxylate, 1-fluorenecarboxylate, 4-fluorenecarboxylate, 9-fluorenone-1-carboxylate, 9-fluorenone-2-carboxylate, 9-fluorenone-4-carboxylate. 7-nitro-4-fluorenecarboxylate, chromone-2-carboxylate, 9-anthracenecarboxylate, anthraquinone-2-carboxylate, xanthene-9-carboxylate, 1-pyrenecarboxylate, and the like, dicarboxylic acid derived anions, such as malonate, methylmalonate, ethylmalonate, butylmalonate, dimethylmalonate, diethylmalonate, succinate, methylsuccinate, dimethylsuccinate, 2-ethyl-2-methylsuccinate, 2,3-dimethylsuccinate, glutarate, 2-methylglutarate, 3-methylglutarate, 2,2-dimethylglutarate, 3,3-dimethylglutarate, 2-ketoglutarate, adipate, 3-methyladipate, 3-tert-butyladipate, pimelate, suberate, azelate, sebacate, perfluorosebacate, 1,11-undecanedicarboxylate (⁻OOC(CH₂)₁₁COO⁻), undecanedioate (⁻OOC(CH₂)₉COO⁻), 1,10-decanedicarboxylate (⁻OOC(CH₂)₁₀COO⁻), 1, 12-dodecanedicarboxylate (⁻OOC(CH₂)₁₂COO⁻), hexadecanedioate (⁻OOC(CH₂)₁₄COO⁻), docosanedioate (⁻OOC(CH₂)₂₀COO⁻), tetracosanedioate (⁻OOC(CH₂)₂₂COO⁻), itaconate, maleate, fumarate, citraconate, mesaconate, glutaconate, β-hydromuconate, traumatate, muconate, chlorosuccinate, bromosuccinate, 2,3-dibromosuccinate, tetrafluorosuccinate, hexafluoroglutarate, perfluoroadipate, perfluorosuberate, 3-chlorododecanedioate, dibromomaleate, diglycolate, 3,6-dioxaoctanedioate, thiodiglycolate, 3,3'-thiodipropionate, 1,3-acetonedicarboxylate, 3-oxoadipate, 4-ketopimelate, 5-oxoazelate, chelidonate, 1,2-cyclopentanedicarboxylate, 3,3-tetramethyleneglutarate, camphorate, cyclohexylsuccinate, 1,1-cyclohexanediacetate, 1,2-cyclohexanedicarboxylate, 1,3-cyclohexanedicarboxylate, 1,4-cyclohexanedicarboxylate, 1,3-adamantanedicarboxylate, 1,3-adamantanediacetate, 5-norbornene-2,3-dicarboxylate, 1,4,5,6,7,7-hexachloro-5-norbornene-2,3-dicarboxylate, phenylsuccinate, 3-phenylglutarate, 1,2-phenylenediacetate, 1,2-phenylenedioxydiacetate, homophthalate, 1,3-phenylenediacetate, 4-carboxyphenoxyacetate, 1,4-phenylenediacetate, 1,4-phenylenedipropionate, 2-carboxycinnamate, 1,4-phenylenediacrylate, 2-carboxybenzenepropanoate, 4,4'-(hexafluoroisopropylidene)bis(benzoate), 4,4'-oxybis(benzoate), phthalate, isophthalate, terephthalate, 3-fluorophthalate, 2-methoxyisophthalate, 3-nitrophathalate, 4-methylphthalate, 2-bromoterephthalate, 4-bromoisophthalate, 4-nitrophthalate, nitroterephthalate, 5-tert-butylisophthalate, 5-octadecyloxyisophthalate, 5-nitroisophthalate, 4,5-dichlorophthalate, tetrafluoroterephthalate, tetrafluoroisophthalate, tetrafluorophthalate, diphenate, 4,4'-biphenyldicarboxylate, 4-[4-(2-carboxybenzoyl)phenyl]butyrate, 1,4-naphthalenedicarboxylate, 2,3-naphthalenedicarboxylate, 2,6-naphthalenedicarboxylate, 2,7-di-tert-butyl-9,9-dimethyl-4,5-xanthenedicarboxylate, phenylmalonate, benzylmalonate, and the like, tricarboxylic acid derived anions, such as tricarballylate, of the formula 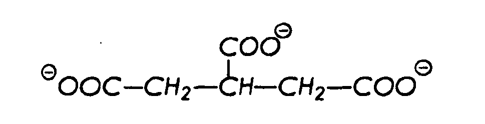 aconitate, nitromethanetrispropionate, 1,3,5-cyclohexanetricarboxylate, 1,3,5-trimethyl-1,3,5-cyclohexanetricarboxylate, 1,2,3-benzenetricarboxylate, 1,2,4-benzenetricarboxylate, 1,3,5-benzenetricarboxylate, 5-(4-carboxy-2-nitrophenoxyisophthalate, and the like, tetracarboxylic acid derived anions, such as 1,2,3,4-butanetetracarboxylate, tetrahydrofuran-2,3,4,5-tetracarboxylate, 2,2',2",2"'-[1,2-ethanediylidene-tetrakis(thio)]-tetrakisacetate, cyclobutanetetracarboxylate, 1,2,4,5-benzenetetracarboxylate, 1,4,5,8-naphthalenetetracarboxylate, and the like monomeric compounds with higher degrees of carboxylate substitution, such as 1,2,3,4,5,6-cyclohexanehexacarboxylate, mellitate, and the like, sulfonic acid derived anions, such as methanesulfonate, ethanesulfonate, 1-propanesulfonate, 2-propanesulfonate, 1-butanesulfonate, 1-pentanesulfonate, 1-hexanesulfonate, 1-heptanesulfonate, 1-octanesulfonate, 1-nonanesulfonate, 1-decanesulfonate, 1-dodecanesulfonate, 1-tetradecanesulfonate, 1-hexadecanesulfonate, vinylsulfonate, 2-methyl-2-propene-1-sulfonate, trifluoromethanesulfonate, 2-chloroethanesulfonate, 2-bromoethanesulfonate, nonafluoro-1-butanesulfonate, perfluoro-1-octanesulfonate, PIPES, of the formula 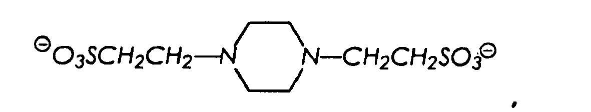 MES, of the formula 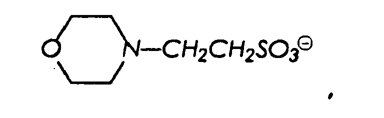 MOPS, of the formula 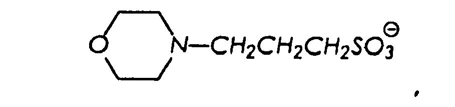 10-camphorsulfonate, 3-bromocamphor-8-sulfonate, 3-bromocamphor-10-sulfonate, 3-sulfopropylacrylate, 3-sulfopropylmethacrylate, dioctyl sulfosuccinate, p-toluene sulfonate, 4-ethylbenzenesulfonate, 4-chlorobenzenesulfonate, 2,4-dinitrobenzenesulfonate, 2-mesitylenesulfonate, 1-naphthalenesulfonate, 2-naphthalenesulfonate, 5-dimethylamino-1-naphthalenesulfonate,

1,5-naphthalene disulfonate, 4-sulfo-1,8-naphthalic anhydride salt, benzenesulfonate, xylenesulfonate, 4-octylbenzenesulfonate, dodecylbenzenesulfonate, 4-styrenesulfonate, 3-nitrobenzenesulfonate, 2-formylbenzenesulfonate, 4-acetylbenzenesulfonate, 4-sulfophenylisothiocyanate salt, 1,2-benzenedisulfonate, 1,3-benzenedisulfonate, 2-formyl-1, 3-benzenedisulfonate, 4-chloro-3-nitrobenzenesulfonate, 4,4'-diisothiocyanato-2,2'-distilbenesulfonate, pentafluorobenzenesulfonate, 1,2-naphthoquinone-4-sulfonate, 2,6-naphthalenedisulfonate, 1,3,6-naphthalenetrisulfonate, 1,3,7-naphthalenetrisulfonate, 9, 10-dimethoxy-2-anthracenesulfonate, anthraquinone-2-sulfonate, anthraquinone-1,5-disulfonate, anthraquinone-2,6-disulfonate, and the like, compounds having both sulfonate groups and carboxylate groups, such as sulfoacetate, sulfosuccinate, 2-sulfobenzoate, 3-sulfobenzoate, 4-sulfobenzoate, 4-sulfophthalate, 5-sulfoisophthalate, dimethyl-5-sulfoisophthalate, and the like, diethyldithiocarbamate, and the like, as well as mixtures thereof.

Examples of sulfonates include, but are not limited to, for example, octylsulfate, decylsulfate, dodecylsulfate, octadecyllsulfate, among others.

Examples of waxy phosphates include, but are not limited to, for example, dimethylphosphinic acid, methylphosphonic acid, ethylphosphonic acid, propylphosphonic acid, t-butylphosphonic acid, methylenediphosphonic acid, vinylphosphonic acid, among others.

In a specific embodiment, the waxy anion can be a waxy organic dianion of the formula A₁₁-R₂₁-A₂₂ wherein A₁₁ and A₂₂ each, independently of the other, are anionic groups, such as carboxylate, sulfonate, or the like, and wherein R₂₁ is (i) an alkylene group (including linear, branched, saturated, unsaturated, cyclic, substituted, and unsubstituted alkylene groups, and wherein hetero atoms, such as oxygen, nitrogen, sulfur, silicon, phosphorus, and the like either may or may not be present in the alkylene group), in one embodiment with at least 1 carbon atoms, in another embodiment with at least 4 carbon atoms, in yet another embodiment with at least 6 carbon atoms, although the number of carbon atoms can be outside of these ranges, provided the counter ion is a waxy counter anion, (ii) an arylene group (including unsubstituted and substituted arylene groups, and wherein hetero atoms, such as oxygen, nitrogen, sulfur, silicon, phosphorus, and the like either may or may not be present in the arylene group), in one embodiment with at least 6 carbon atoms, in another embodiment with at least 10 carbon atoms, and in yet another embodiment with at least 18 carbon atoms, etc., although the number of carbon atoms can be outside of these ranges, providing the counter ion is a waxy counter ion, (iii) an arylalkylene group (including unsubstituted and substituted arylalkylene groups, wherein the alkyl portion of the arylalkylene group can be linear, branched, saturated, unsaturated, and/or cyclic, and wherein hetero atoms, such as oxygen, nitrogen, sulfur, silicon, phosphorus, and the like either may or may not be present in either or both of the alkyl portion and the aryl portion of the arylalkylene group), in one embodiment with at least 7 carbon atoms, in another embodiment with at least 12 carbon atoms, and in yet another embodiment with at least 18 carbon atoms, although the number of carbon atoms can be outside of these ranges, such as benzyl or the like, providing the counter ion is a waxy counter ion as described herein, or (iv) an alkylarylene group (including unsubstituted and substituted alkylarylene groups, wherein the alkyl portion of the alkylarylene group can be linear, branched, saturated, unsaturated, and/or cyclic, and wherein hetero atoms, such as oxygen, nitrogen, sulfur, silicon, phosphorus, and the like either may or may not be present in either or both of the alkyl portion and the aryl portion of the alkylarylene group), in one embodiment with at least 7 carbon atoms, in another embodiment with at least 12 carbon atoms, and in yet another embodiment with at least 18 carbon atoms, although the number of carbon atoms can be outside of these ranges, providing the counter ion is a waxy counter ion, such as tolyl or the like, and wherein the substituents on the substituted alkylene, arylene, arylalkylene, and alkylarylene groups can be (but are not limited to) hydroxy groups, halogen atoms, amine groups, imine groups, ammonium groups, cyano groups, pyridine groups, pyridinium groups, ether groups, aldehyde groups, ketone groups, ester groups, amide groups, carbonyl groups, thiocarbonyl groups, sulfate groups, sulfide groups, sulfoxide groups, phosphine groups, phosphonium groups, phosphate groups, nitrile groups, mercapto groups, nitro groups, nitroso groups, sulfone groups, acyl groups, acid anhydride groups, azide groups, azo groups, cyanato groups, isocyanato groups, thiocyanato groups, isothiocyanato groups, carboxylate groups, carboxylic acid groups, urethane groups, urea groups, mixtures thereof, and the like, wherein two or more substituents can be joined together to form a ring. Examples of suitable organic dianions include unsubstituted and substituted naphthalene disulfonates, unsubstituted and substituted benzene disulfonates, and the like, as well as mixtures thereof.

In another specific embodiment, the organic anion can be an organic trianion, tetraanion, and higher, an oligomeric or polymeric anion, such as a polysulfonate or polycarboxylate, or the like. Mixtures of two or more different anions can also be used.

In a specific embodiment, the waxy counter ion is dodecyl benzene sulfonate of the formula

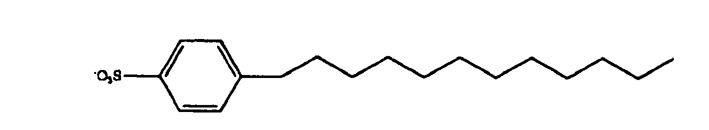

Colorants used in the present disclosure can be prepared by any desired or effective procedure. In embodiments, synthesis can comprise, for example, synthesis of a Leuco version of the colorant via a condensation step, oxidation of the Leuco version of the colorant, formation of the carbinol form of the basic dye, and formation of the final dye with a wax solubilizing counter-ion.

For example, the Leuco version of the colorant can be synthesized by condensation reaction of an aldehyde with an aniline having the desired pendant groups selected as defined for the colorant herein, heated, either neat or, optionally, in the presence of a solvent, after which an acid is added, for example concentrated H₂SO₄ with additional heating.

The aldehyde component and the aniline component are present in any desired or effective relative amounts, in one embodiment at least 1 mole of aldehyde component per every 2 moles of aniline component, in another embodiment at least 0.5 mole of aldehyde component per every 2 moles of aniline component, and in yet another embodiment at least 0.9 mole of aldehyde component per every 2 moles of aniline component, and in one embodiment no more than 1.9 moles of aldehyde component per every 2 moles of aniline component, in another embodiment no more than 1.5 moles of aldehyde component per every 2 moles of aniline component, and in yet another embodiment no more than 1.1 moles of aldehyde component per every 2 moles of aniline component, although the relative amounts can be outside of these ranges.

If desired, the reaction can be run neat, in the absence of a solvent. In addition, if desired, the reaction can be run in the presence of an optional solvent. Examples of suitable solvents include tetramethylene sulfone (sulfolane), N-methyl pyrrolidone, dimethyl formamide, dimethyl sulfoxide, octanol, or the like, as well as mixtures thereof. When present, the optional solvent is present in any desired or effective amount, in one embodiment at least 1 liter per every 0.1 mole of aldehyde component, in another embodiment at least 1 liter per every 0.3 mole of aldehyde component, and in yet another embodiment at least 1 liter per every 0.35 mole of aldehyde component, and in one embodiment no more than 1 liter per every 2 moles of aldehyde component, in another embodiment no more than 1 liter per every 1.5 moles of aldehyde component, and in yet another embodiment no more than 1 liter per every 1 mole of aldehyde component, although the relative amounts can be outside of these ranges. The mixture of aldehyde component, aniline component, and optional solvent is then heated to any effective temperature, in one embodiment at least 62°C, in another embodiment at least 100°C, in another embodiment at least 150 °C, and in yet another embodiment at least 190°C, and in one embodiment no more than 280°C, in another embodiment no more than 220°C, and in yet another embodiment no more than 200°C, although the temperature can be outside of these ranges.

The mixture of aldehyde component, aniline component, and optional solvent is heated for any effective period of time, in one embodiment at least 5 minutes, in another embodiment at least 2 hours, and in yet another embodiment at least 3 hours, in yet another embodiment at least 24 hours, and in one embodiment no more than 4 days, in another embodiment no more than 60 hours, and in yet another embodiment no more than 40 hours, although the time can be outside of these ranges.

The product is then neutralized, for example with a NaOH solution, and collected, for example via vacuum filtration. The crude product can then, if desired, be purified, for example by washing with water.

The Leuco version of the colorant can then be oxidized for example by combining the Leuco version of the colorant with a suitable oxidizing agent heated, either neat or, optionally, in the presence of a solvent, for a period of time and at a temperature sufficient to assure complete oxidation of the Leuco form to the fully developed form.

Any suitable oxidizing agent can be selected in embodiments herein. For example, the oxidizing agent can be selected from the group consisting of, but not limited to, chloranil, benzoquinone, DDQ (2,3-dichloro-5,6-dicyano-1,4-benzoquinone), as well as other chlorinated quinines, MnO₂, PbO₂/HCl, and mixtures and combinations thereof. See, for example, U. S. Patent 5,013,857, which is not meant to limit the present disclosure or claims, entitled "Process for the preparation of sulpho-free triphenyl-methane dyestuffs." The oxidizing agent can be selected in any suitable amount, for example, in embodiments, about 1 mole of oxidizing agent per every 1 mole of Leuco version of the colorant, at least 1 mole of oxidizing agent component per every 2 moles of Leuco version of the colorant, in another embodiment at least 0.5 mole of oxidizing agent per every 2 moles of Leuco version of the colorant, and in yet another embodiment at least 0.9 mole of oxidizing agent per every 2 moles of Leuco version of the colorant, and in one embodiment no more than 1.9 moles of oxidizing agent per every 2 moles of Leuco version of the colorant, in another embodiment no more than 1.5 moles of oxidizing agent per every 2 moles of Leuco version of the colorant, and in yet another embodiment no more than 1.1 moles of oxidizing agent per every 2 moles of Leuco version of the colorant, although the relative amounts can be outside of these ranges.

If desired, the reaction can be run neat, in the absence of a solvent. In addition, if desired, the reaction can be run in the presence of an optional solvent. Examples of suitable solvents include water, methanol, isopropanol, ethyl alcohol, tetramethylene sulfone (sulfolane), N-methyl pyrrolidone, dimethyl formamide, dimethyl sulfoxide, octanol, among others, or the like, as well as mixtures thereof. When present, the optional solvent is present in any desired or effective amount, in one embodiment at least 1 liter per every 0.1 mole of Leuco version of the colorant, in another embodiment at least 1 liter per every 0.3 mole of Leuco version of the colorant, and in yet another embodiment at least 1 liter per every 0.35 mole of Leuco version of the colorant, and in one embodiment no more than 1 liter per every 2 moles of Leuco version of the colorant, in another embodiment no more than 1 liter per every 1.5 moles of Leuco version of the colorant, and in yet another embodiment no more than 1 liter per every 1 mole of Leuco version of the colorant, although the relative amounts can be outside of these ranges.

After fully oxidizing the basic dye component, the carbinol form of the basic dye can be prepared, for example, by combining the oxidized form of the colorant and a hydroxide containing base with heating and stirring as suitable to achieve the carbinol form of the basic dye.

Any suitable hydroxide containing base can be selected in embodiments herein. For example, the hydroxide containing base can be selected from the group consisting of, but not limited to, metal hydroxides for example potassium hydroxide, lithium hydroxide, sodium hydroxide, calcium hydroxide, magnesium hydroxide, barium hydroxide, and mixtures and combinations thereof.

The oxidized form of the basic dye component and the hydroxide containing base are present in any desired or effective relative amounts, in one embodiment about 1 mole of the oxidized form of the basic dye per every 1 mole of the hydroxide containing base, in another embodiment, about 0.5 mole of the oxidized form of the basic dye per every about 1 mole of the hydroxide containing base, in another embodiment, about 0.75 mole of the oxidized form of the basic dye per every about 1 mole of the hydroxide containing base, although the relative amounts can be outside of these ranges.

The mixture of oxidized form of the basic dye and hydroxide containing base is heated for any effective period of time, in one embodiment at least 5 minutes, in another embodiment at least 2 hours, and in yet another embodiment at least 3 hours, in yet another embodiment at least 24 hours, and in one embodiment no more than 4 days, in another embodiment no more than 60 hours, and in yet another embodiment no more than 40 hours, although the time can be outside of these ranges.

The product is then neutralized, for example with a NaOH solution, and collected, for example via vacuum filtration. The crude product can then, if desired, be purified, for example by washing with water.

The carbinol form of the basic dye and a selected wax solubilizing counter ion are combined in any desired or effective relative amounts, in one embodiment about equimolar amounts of each dye, although the relative amounts can be outside of these ranges, with solvent, and heated with stirring, until all of the solvent boiled off.

Examples of suitable solvents include, but are not limited to, for example, ethanol, water, methanol, isopropanol, butanol, tetramethylene sulfone (sulfolane), N-methyl pyrrolidone, dimethyl formamide, dimethyl sulfoxide, octanol, or the like, as well as mixtures and combinations thereof. When present, the solvent is present in any desired or effective amount, and additional solvent added as necessary to remove the water from the final product. For example, the solvent can be present in one embodiment in an amount of at least 1 liter of solvent per every about 0.1 mole of carbinol version of the basic dye component, in another embodiment at least 1 liter of solvent per every about 0.3 mole of carbinol version of the basic dye component, and in yet another embodiment at least 1 liter of solvent per every 0.35 mole of carbinol version of the basic dye component, and in one embodiment no more than 1 liter of solvent per every 2 moles of carbinol version of the basic dye component, in another embodiment no more than 1 liter of solvent per every 1.5 moles of carbinol version of the basic dye component, and in yet another embodiment no more than 1 liter of solvent per every 1 mole of carbinol version of the basic dye component, although the relative amounts can be outside of these ranges.

The mixture of carbinol form of the basic dye, waxy counter ion, and solvent is heated to any effective temperature, in one embodiment at least 62°C, in another embodiment at least 100°C, in another embodiment at least 110 °C, in another embodiment at least 150 °C, and in yet another embodiment at least 190°C, and in one embodiment no more than 280°C, in another embodiment no more than 220°C, and in yet another embodiment no more than 200°C, although the temperature can be outside of these ranges. Additional solvent can be added and the heating process repeated as necessary.

In embodiments, used in the invention include compounds of the formula

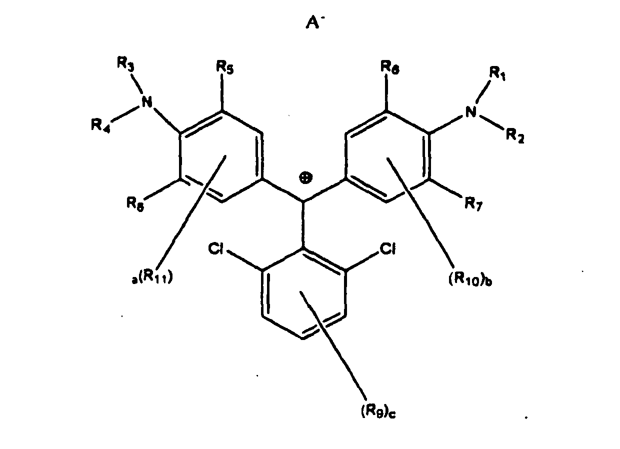

### EXAMPLES

The following Examples are being submitted to further define various species of the present disclosure.

Also, parts and percentages are by weight unless otherwise indicated.

### Example 1

### Part A: Synthesis of the Leuco Version of the Dye (Tetramethyl Adduct with DDBSA Counter-Anion)

About 25.0 grams of 2,6-dimethyl aniline of the formula

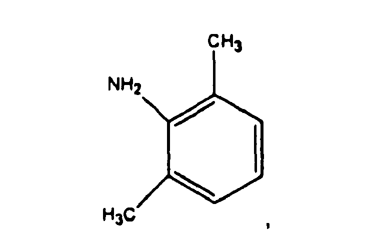

17.5 grams of 2,6-dichloro benzaldehyde of the formula 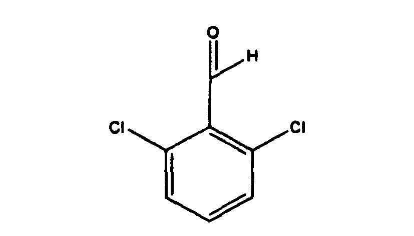 and 50 grams of deionized water were added to a 150 milliliter 1-neck round bottom flask equipped with a Teflon^{®} coated magnet, condenser, and oil bath. The contents were mixed and 12 milliliters of concentrated H₂SO₄ were added to the mixed contents. The flask was placed in a 100 °C oil bath and allowed to stir and heat. After about 24 hours of heating, the crude product was poured into a 1 liter beaker containing 500 milliliters of ice water, stirred for about 30 minutes, and allowed to set overnight. The product mixture was then neutralized with about 30 milliliters of 40 % NaOH and collected via vacuum filtration. The tan solid was washed with about 500 milliliters of water, reslurried in about 500 milliliters of water, and this process of washing and reslurrying was repeated. The filtered solids were then allowed to dry. The Leuco (colorless) version of the basic dye produced is believed to be of the formula

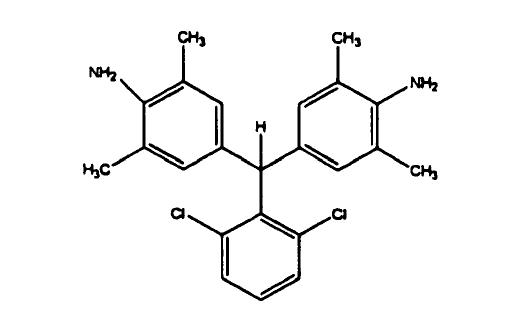

### Example 1

### Part B: Oxidation of the Leuco Version of the Dye

About 10.0 grams of the solid collected in Example 1, Part A, was added to a 500 milliliter 1-neck round bottom flask equipped with a Teflon® coated magnet, condenser and oil bath. 40 milliliters of ethyl alcohol and 4.75 grams of chloranil (an oxidizing agent) were added and the flask was placed in a 70 C oil bath with stirring. A blue color began to develop immediately and deepen with time. The flask was heated for about 2 hours to insure complete oxidation of the Leuco form of the dye to the fully developed form, believed to be of the formula

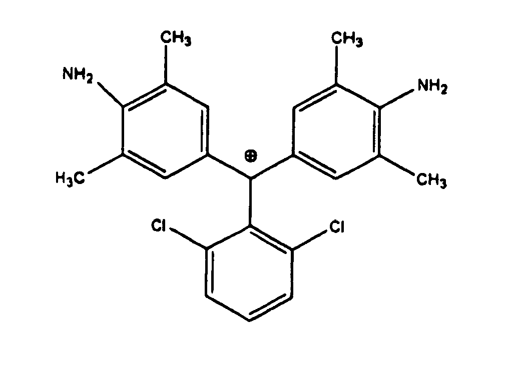

### Example 1

### Part C: Formation of the Carbinol Form of the Dye

Alter the reaction mixture had been fully oxidized, as outlined in

Example 1, Part B, the pH was made alkaline by the addition of about 25 milliliters of 40 % NaOH. The blue color immediately disappeared indicating the formation of the carbinol form of the dye. Heating and stirring was continued for about 5 additional minutes. The crude product was poured into a 1000 milliliter beaker containing 250 milliliters of water and 2.5 grams of 40 % NaOH and allowed to set overnight. About 9.62 grams of the carbinol form of the dye were obtained, believed to be of the formula

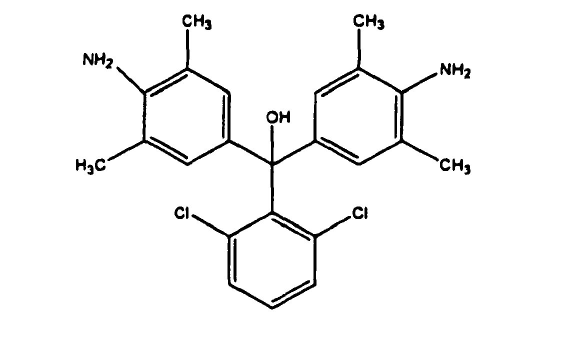

### Example 1

### Part D: Formation of the Final Dye With a Wax Solubilizing Counter-Ion

About 4.64 grams of the carbinol form of the dye from Example 1, Part C, 3.6 grams of the free acid form of DDBSA (dodecyl benzene sulfonic acid) believed to be of the formula

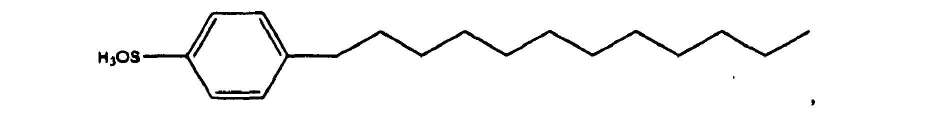

And about 300 milliliters of ethanol were added to a 500 milliliter beaker equipped with a Teflon® coated magnet, condenser and oil bath. The mixture was stirred and heated in a 100 °C oil bath until all of the ethanol and water boiled off leaving a gooey blue solid comprising the final dye with a wax solubilizing counter DDBSA counter-ion believed to be of the formula

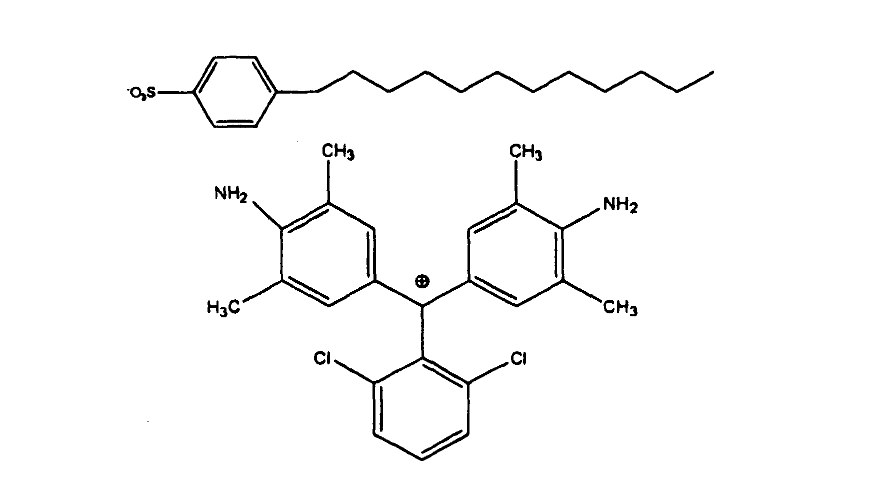

### Example 1

### Part E: Formation of the Final Dye With

### A Non-Wax Solubilizing Counter-Ion

About 5.0 grams of the carbinol form of the dye from Example 1. Part C and about 100 milliliters of deionized water were added to a 250 milliliter beaker equipped with a stirrer. The mixture was stirred and H₃PO₄ was added until the mixture was acidic (pH about 3). The mixture was transferred to a 600 milliliter 1-neck round bottom flask equipped with a distillation column and Teflon® coated stir magnet. 250 milliliters of toluene were added and the water was azeotroped off leaving a dye that is soluble in the toluene solvent (but insoluble in a hot melt ink base). The dye was filtered and collected and is believed to be of the formula

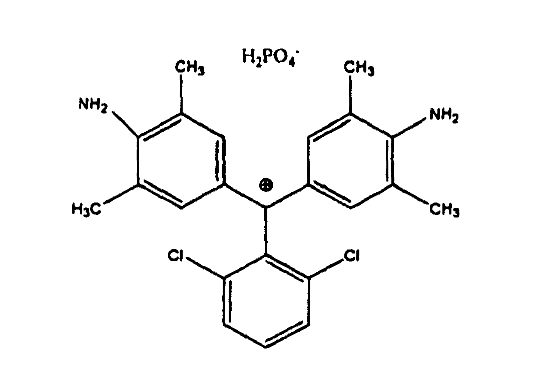

### Example 1

### Part F: Formation of the Final Dye With a Wax Solubilizing Counter-Ion

About 4.64 grams of the carbinol form of the dye from Example 1, Part C, about 2.58 grams of the free acid form of p-OBA (para-octyl benzoic acid) believed to be of the formula 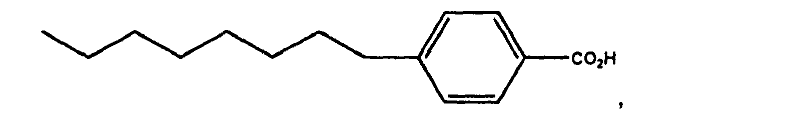 about 300 milliliters of ethanol is added to a 500 milliliter beaker equipped with a Teflon^{®} coated magnet, condenser and oil bath. The mixture is stirred and heated in a 100 °C oil bath until all of the ethanol and water boils off leaving a blue solid comprising the final dye with a wax solubilizing counter DDBSA counter-ion believed to be of the formula

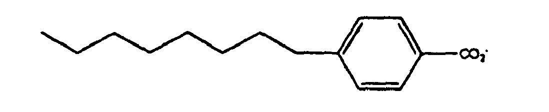

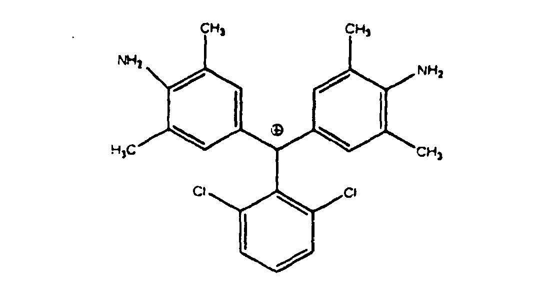

### Example 1

### Part G: Formation of the Final Dye With a Wax Solubilizing Counter-Ion

About 4.64 grams of the carbinol form of the dye from Example 1, Part C, about 8.10 grams of the acid form of X-1070 (Phosphate ester available from the Baker Petrolite Corp.) believed to be of the formula 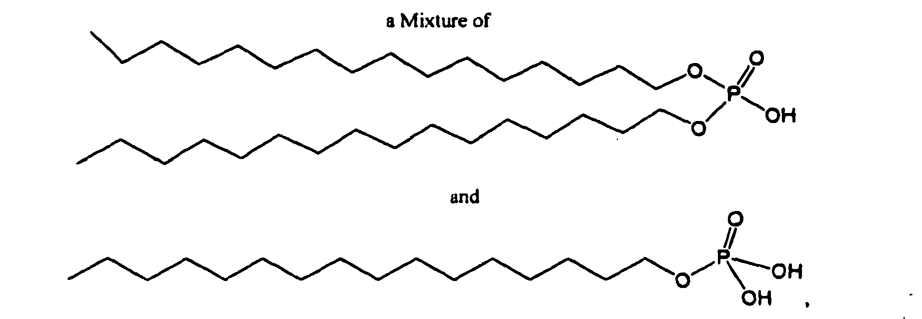 and about 300 milliliters of butanol is added to a 500 milliliter beaker equipped with a Teflon^{®} coated magnet, condenser and oil bath. The mixture is stirred and heated in a 120 °C oil bath until all of the butanol and water boils off leaving a blue solid comprising the final dye with a wax solubilizing counter DDBSA counter-ion believed to be of the formula:

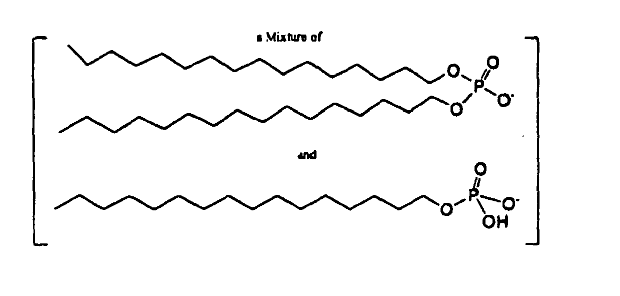

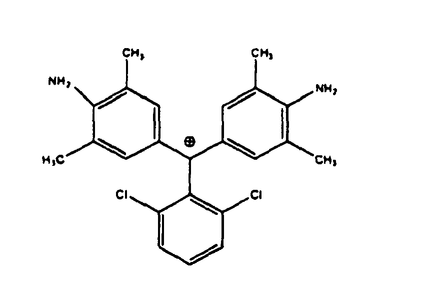

### Example 2

### Part A: Synthesis of the Leuco Version of the Dye

About 30.8 grams of 2,6-diethyl aniline of the formula 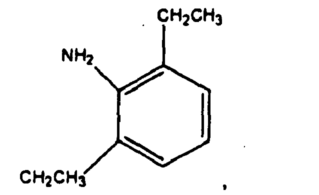 17.5 grams of 2,6-dichloro benzaldehyde of the formula 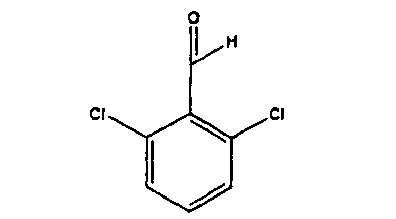 and 50 grams of deionized water were added to a 150 milliliter 1-neck round bottom flask equipped with a Teflon^{®} coated magnet, condenser, and oil bath. The contents were mixed and 12 milliliters of concentrated H₂SO₄ were added to the mixed contents. The flask was placed in a 100 °C oil bath and allowed to stir and heat. After about 24 hours of heating, the crude product was poured into a 1 liter beaker containing 500 milliliters of ice water, stirred for about 30 minutes, and allowed to set overnight. The product mixture was then neutralized with about 30 milliliters of 40 % NaOH and collected via vacuum filtration. The tan solid was washed with about 500 milliliters of water, reslurried in about 500 milliliters of water, and this process of washing and reslurrying was repeated. The filtered solids were then allowed to dry. The Leuco (colorless) version of the basic dye produced is believed to be of the formula

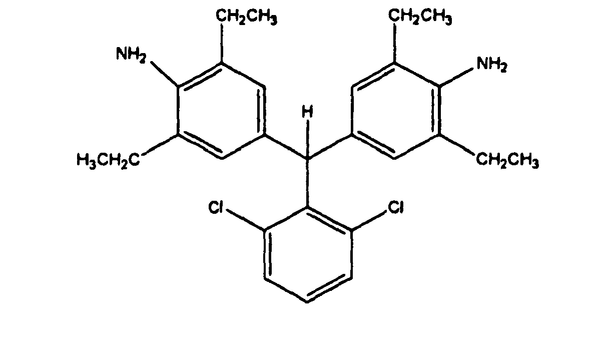

### Example 2

### Part B: Oxidation of the Leuco Version of the Dye

The solid collected in Example 2, Part A, was added to a 500 milliliter 1-neck round bottom flask equipped with a Tetlon® coated magnet, condenser and oil bath. 250 milliliters of ethyl alcohol and 25 grams of chloranil (an oxidizing agent) were added and the flask was placed in a 70 °C oil bath with stirring. A blue color began to develop immediately and deepen with time. The flask was heated for about 2 hours to insure complete oxidation of the Leuco form of the dye to the fully developed form, believed to be of the formula

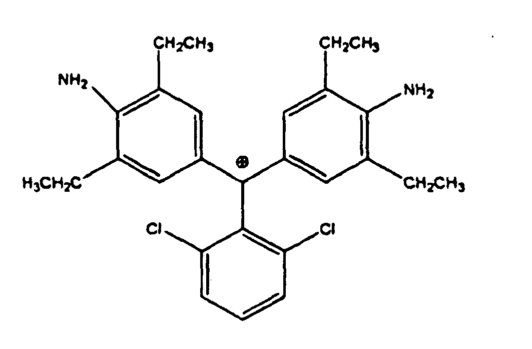

### Example 2

### Part C: Formation of the Carbinol Form of the Dye

After the reaction mixture had been fully oxidized, as outlined in Example 2, Part B, the pH was made alkaline by the addition of about 25 milliliters of 40 % NaOH. The blue color immediately disappeared indicating the formation of the carbinol form of the dye. Heating and stirring was continued for about 5 additional minutes. The crude product was poured into a 1000 milliliter beaker containing 250 milliliters of water and 5 grams of 40 % NaOH and allowed to set overnight. The carbinol form of the dye obtained is believed to be of the formula

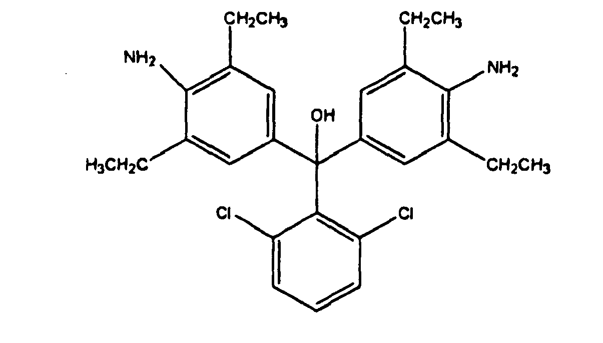

### Example 2

### Part D: Formation of the Final Dye With a Wax Solubilizing Counter-Ion

After the redaction mixture from Example 2, Part C had been allowed to set and settle overnight, it was observed that the product had settled on the bottom of the flask as a sticky solid. The liquid was decanted off and slurried with water several times, decanting off the water after each slurry. The product was collected as a wet cake. Half of the wet cake was transferred to a 1000 milliliter beaker equipped with a Teflon® coated magnet, condenser and oil bath. About 400 milliliters of ethyl alcohol and 15.0 grams of the free acid form of dodecyl benzene sulfonic acid believed to be of the formula 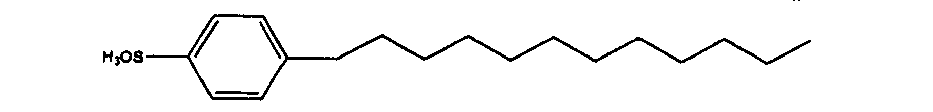 was added. The mixture was stirred and heated in a 110 °C oil bath until all of the ethanol and water boiled off leaving a gooey blue solid comprising the final dye with a wax solubilizing counter DDBSA counter-ion believed to be of the formula

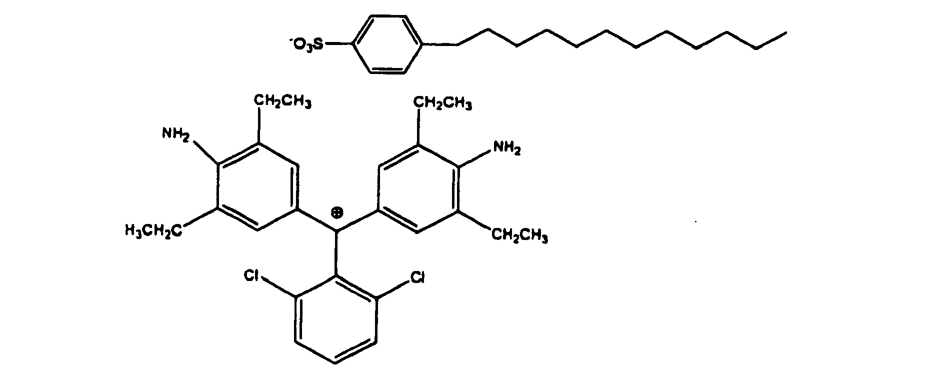

### Example 3

### Part A: Synthesis of the Leuco Version of the Dye

About 28.0 grams of 2,6-diisopropyl aniline of the formula 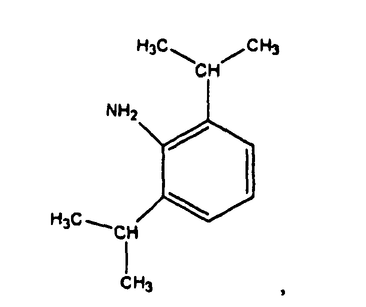 13.4 grams of 2,6-dichloro benzaldehyde of the formula 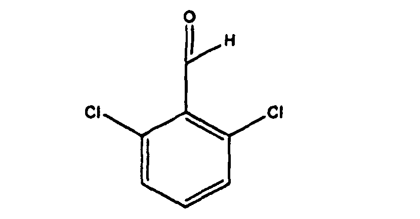 and 38.3 grams of deionized water were added to a 150 milliliter 1-neck round bottom flask equipped with a Teflon^{®} coated magnet, condenser, and oil bath. The contents were mixed and 16.5 grams of concentrated H₂SO₄ were added to the mixed contents. The flask was placed in a 100 °C oil bath and allowed to stir and heat. After about 24 hours of heating, the crude product was poured into a 1 liter beaker containing 500 milliliters of ice water, stirred for about 30 minutes, and allowed to set overnight. The product mixture was then neutralized with about 30 milliliters of 40 % NaOH and collected via vacuum filtration. The tan solid was washed with about 500 milliliters of water, reslurried in about 500 milliliters of water, and this process of washing and reslurrying was repeated. The filtered solids were then allowed to dry. About 38.2 grams of the tan solid were collected. The Leuco (colorless) version of the basic dye produced is believed to be of the formula

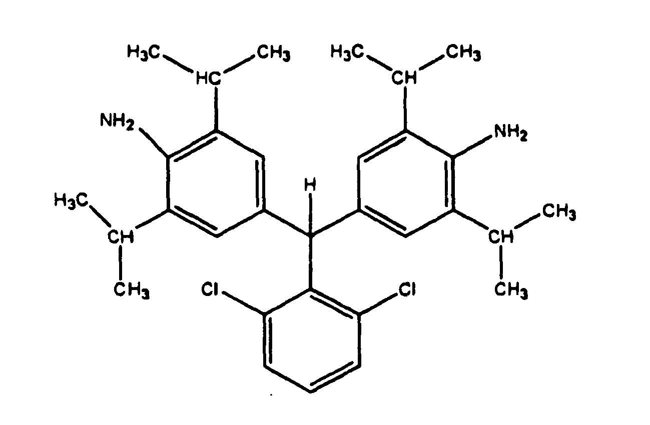

### Examples 3

### Part B: Oxidation of the Leuco Version of the Dye

About 12. 25 grams of the solid collected in Example 3, Part A, was added to a 500 milliliter 1-neck round bottom flask equipped with a Teflon® coated magnet, condenser and oil bath. 50 milliliters of ethyl alcohol and 5.0 grams of chloranil (an oxidizing agent) were added and the flask was placed in a 70 °C oil bath with stirring. A blue color began to develop immediately and deepen with time. The flask was heated for about 2 hours to insure complete oxidation of the Leuco form of the dye to the fully developed form, believed to be of the formula

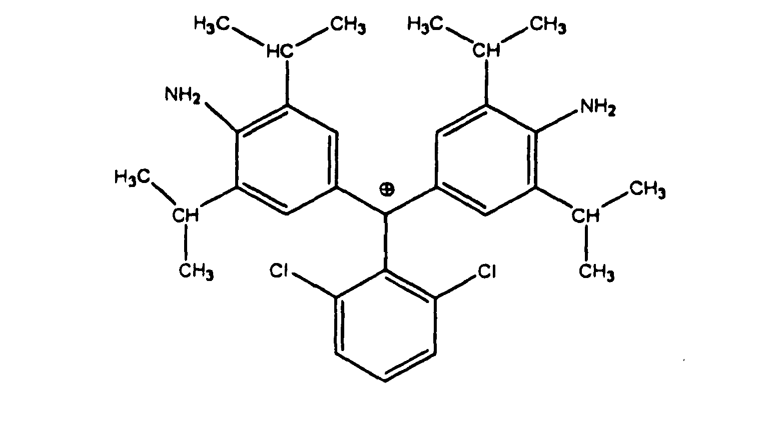

### Example 3

### Part C: Formation of the Carbinol Form of the Dye

After the reaction mixture had been fully oxidized, as outlined in Example 3, Part B, the pH was made alkaline by the addition of about 5.5 milliliters of 40 % NaOH. The blue color immediately disappeared indicating the formation of the carbinol form of the dye. Heating and stirring was continued for about 5 additional minutes. The crude product was poured into a 1000 milliliter beaker containing 150 milliliters of water and 52. grams of 40 % NaOH and allowed to set overnight. The carbinol form of the dye obtained is believed to be of the formula

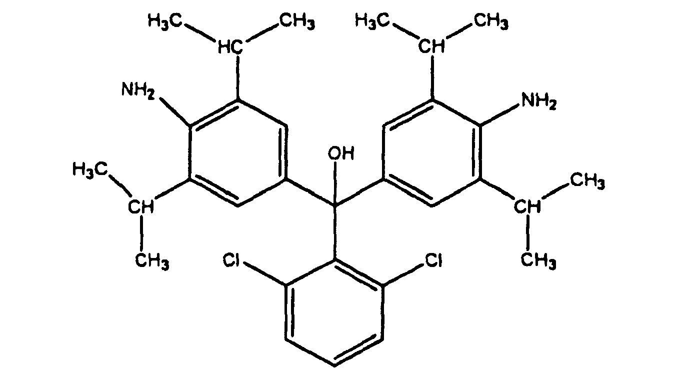

### Examples 3

### Part D: Formation of the Final Dye With a Wax Solubilizing Counter-Ion

After the reaction mixture from Example 3, Part C had been allowed to set and settle overnight, it was observed that the product had settled on the bottom of the flask as a sticky solid. The liquid was decanted off. About 500 milliliters of ethyl alcohol and 7.4 grams of the free acid form of dodecyl benzene sulfonic acid of the formula 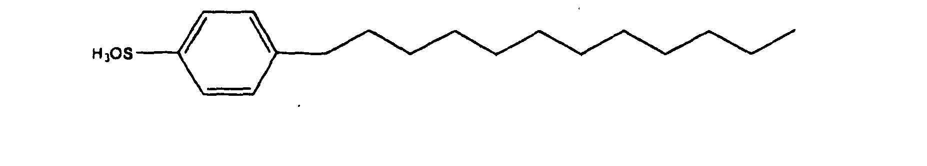 was added. The mixture was stirred and heated in a 110 °C oil bath until all of the ethanol and water boiled off leaving a gooey blue solid comprising the final dye with a wax solubilizing DDBSA counter-ion believed to be of the formula

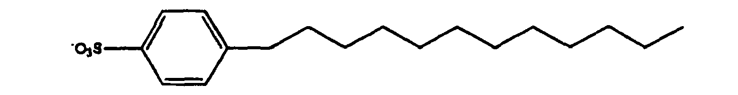

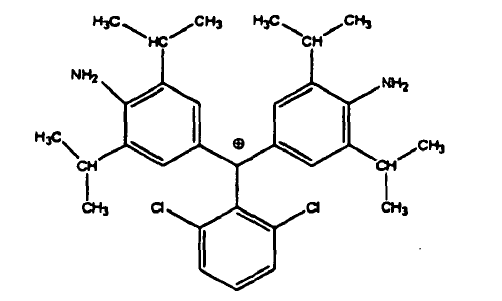

### Example 4

### Part A: Synthesis of the Leuco Version of the Basic Dye

About 29.8 grams of N,N-diethylamino aniline of the formulae 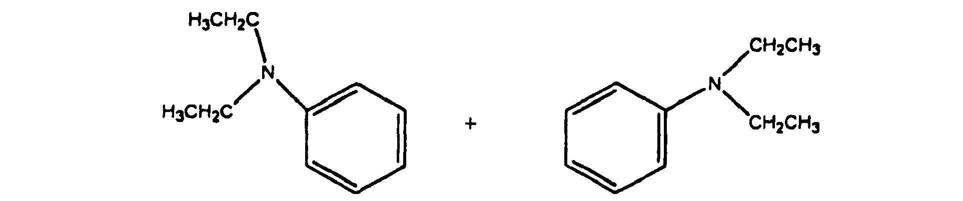 about 17.7 grams of 4-diethylamino benzaldehyde of the formula 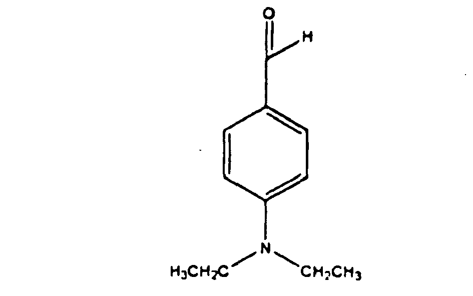 and 100 grams of deionized water were added to a 150 milliliter 1-neck round bottom flask equipped with a Teflon^{®} coated magnet, condenser, and oil bath. The contents were mixed and 21.6 grams of concentrated H₂SO₄ were added. The flask was placed in a 100 °C oil bath and allowed to stir and heat. After about 24 hours of heating, the crude product was poured into a 1 liter beaker containing 500 milliliters of ice water and stirred for about 30 minutes and allowed to set overnight. The product mixture was then neutralized with 40% NaOH (about 30 milliliters) and collected via vacuum filtration. The tan solid was washed with about 500 milliliters of water, reslurried in about 500 milliliters of water, filtered, and this processed was repeated. The filtered solids were then allowed to dry. The Leuco (colorless) version of the basic dye produced is believed to be of the formula

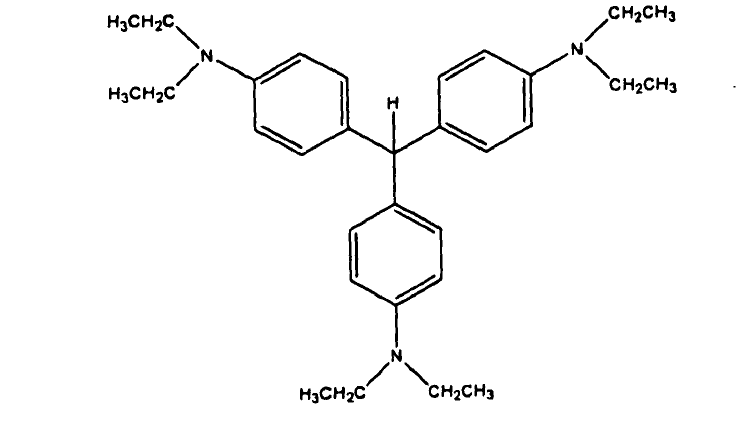

### Example 4

### Part B: Oxidation of the Leuco Version of the Basic Dye

The solid collected in Example 2, Part A, 150 milliliters of ethyl alcohol, and 25 grams of chloranil (an oxidizing agent) were added to a 150 milliliter 1-neck round bottom flask equipped with a Tenon^{®} coated magnet, condenser, and oil bath. The flask was placed in a 70 °C unit bath with stirring. A blue color began to develop immediately and deepen with time. The flask was heated for about 2 hours to insure complete oxidation of the Leuco form of the dye to the fully developed form, believed to be of the formula

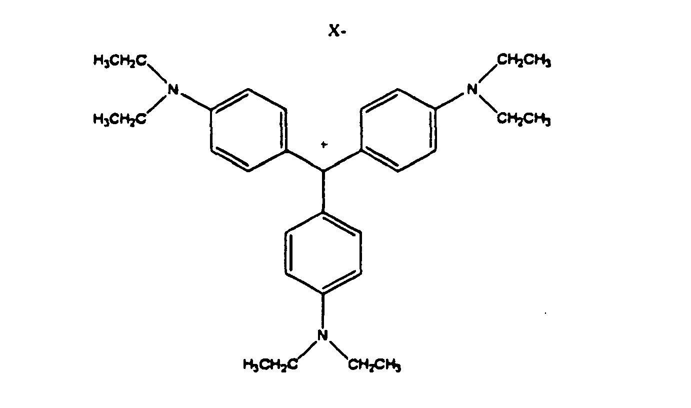

### Example 4

### Part C: Formation of the Carbinol Form of the Basic Dye

After the reaction mixture had been fully oxidized, as outlined in Example 4. Part B, the pH was made alkaline with 40 % NaOH. The blue color immediately disappeared indicating the formation of the carbinol form of the dye. Heating and stirring was continued for 5 additional minutes. The crude product was poured into a 1000 milliliter beaker containing 150 milliliters of water and 2.5 grams of 40% NaOH and allowed to set overnight. The solids were collected by filtration and placed in a sealed container (approx 22.4 grams of carbinol violet dye obtained). The carbinol form of the dye is believed to be of the formula

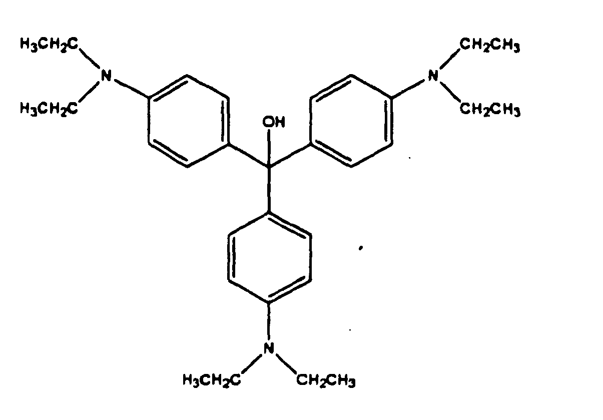

### Example 4

### Part D: Formation of the Final Dye With a Wax Solubilizing Counter-Ion

About 5.22 grams of the carbinol form of the dye from Example 4, Part C, about 3.6 grams of the free acid form of DDBSA (dodecyl benzene sulfonic acid) believed to be of the formula 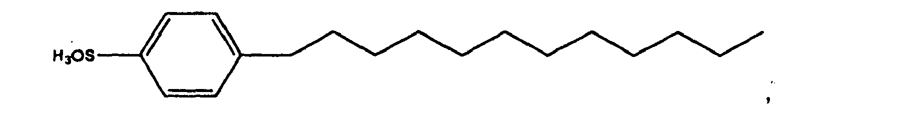 and about 300 milliliters of ethanol is added to a 500 milliliter beaker equipped with a Teflon^{®} coated magnet, condenser and oil bath. The mixture is stirred and heated in a 100 °C oil bath until all of the ethanol and water boils off leaving a violet solid comprising the final dye with a wax solubilizing counter DDBSA counter-ion believed to be of the formula

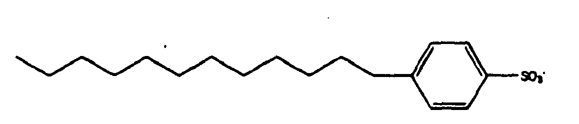

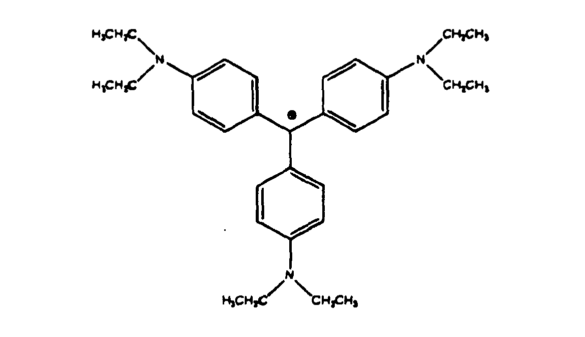

### Example 5

### Preparation of an Ink Base

An ink base was prepared by melting, admixing, and filtering the following ingredients:
43.59 parts by weight polyethylene wax (PE 655®, obtained from Baker Petrolite) of the formula CH₃(CH₂)₅₀CH₃);
19.08 parts by weight stearyl stearamide wax (KEMAMIDE® S-180, obtained from Crompton Corporation);
18.94 parts by weight tetra-amide resin obtained from the reaction of one equivalent of a C-36 dimer acid (obtained from Uniqema, New Castle, DE) with two equivalents of ethylene diamine and UNICID® 700 (obtained from Baker Petrolite), a long chain hydrocarbon having a terminal carboxylic acid group, prepared as described in Example 0 of U.S. Patent 6,174, 937, which is hereby incorporated by reference herein in its entirety;
11.71 pans by weight urethane resin obtained from the reaction of two equivalents of ABITOL® E hydroabietyl alcohol (obtained from Hercules Inc.) and one equivalent of isophorone diisocyanate, prepared as described in Example 1 of U. S. Patent 5,782,966, which is hereby incorporated by reference herein;
6.48 parts by weight urethane resin that is the adduct of three equivalents of stearyl isocyanate and a glycerol-based alcohol, prepared as described in Example 4 of U. S. Patent 6,309,453, which is hereby incorporated by reference herein in its entirety;
0.20 parts by weight NAUGUARD® 445 antioxidant (obtained from Uniroyal Chemical Co.).

Thereafter, 600 grams of the ink carrier components as listed above in the percentages as listed above were added to a 1 liter beaker and heated in an oven at 135 °C until molten. Subsequently, the beaker was inserted into a heating mantle set to 135 °C and the contents of the beaker were stirred for 45 minutes. The resulting ink was then filtered through a combination of Whatman #3 and 0.2 micron NAE filters and placed in a Mott filter assembly. Filtration was supported by the addition of 1 percent by weight FILTER-AID obtained from Fluka Chemika, Switzerland, and proceeded at a temperature of 135 °C until complete after 6 hours. The ink base was poured into molds containing about 31 grams of the colorless ink base and allowed to cool.

### Example 6

### Preparation of Ink Containing Colorant

About 30.5 grams of ink base from Example 5 was placed in a 100 milliliter beaker with a magnetic stir bar and subsequently placed in a 135 °C oil bath until molten. About 0.8 grams of the dye product of Example 1, Part D was then added and stirred for about 3 hours. The blue colored ink was then poured into an aluminum mold.

### Examples

### Preparation or Ink Containing Colorant

About 30.0 grams of ink base from Example 5 was placed in a 100 milliliter beaker with a magnetic stir bar and subsequently placed in a 135 °C oil bath until molten. About 1.65 grams of the dye product of Example 2, Part D was then added and stirred for about 3 hours. The blue colored ink was then poured into an aluminum mold.

### Example 8

### Preparation of Ink Containing Colorant

About 30.0 grams of ink base from Example 5 was placed in a 100 milliliter beaker with a magnetic stir bar and subsequently placed in a 135 °C oil bath until molten. About 1.65 grams of the dye product of Example 1, Part E was then added and stirred for about 3 hours. The dye did not dissolve in the ink base. The ink base with dye was then poured into an aluminum mold. Dye was observed on the bottom of the beaker.

### Example 9

### Preparation of Ink Containing Colorant

About 30.6 grams of ink base from Example 4 was placed in a 100 milliliter beaker with a magnetic stir bar and subsequently placed in a 135 °C oil bath until molten. About 1.7 grams of the dye product of Example 3, Part D was then added and stirred for about 3 hours. The blue colored ink was then poured into an aluminum mold.

### Examples 10

### Printing of Ink Samples Containing Colorant

Printed samples of the inks prepared in Examples 6 through 9 were generated on HAMMERMILL LASERPRINT® paper using a K Printing Proofer (manufactured by RK Print Coat Instrument Ltd., Litlington, Royston, Heris, SG8 0OZ, U.K.). In this method, the tested inks were melted onto a printing plate set at 150°C. A roller bar fitted with the paper was then rolled over the plate containing the melted ink on its surface. The ink on the paper was cooled, resulting in three separated images of rectangular blocks (three different intensities of ink coverage on the paper). The most intensely colored block contained the most ink deposited on the paper, and was therefore used to obtain the color value measurements. The print samples were evaluated visually.

## Claims

1. Use of a compound having the following formula as colorant in a hot melt or phase change ink 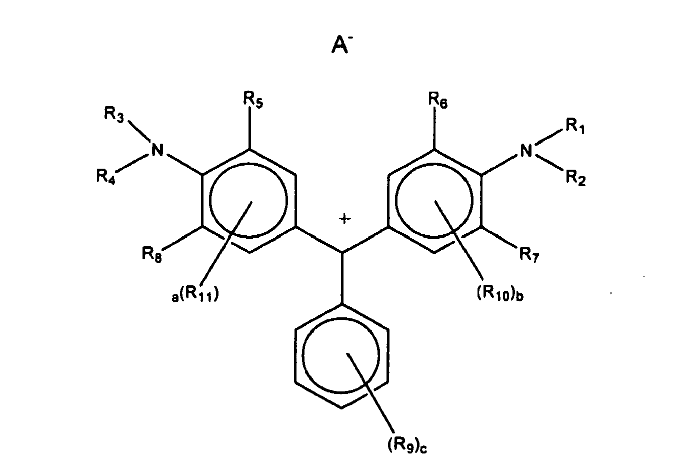 wherein R₁, R₂, R₃, and R₄, each, independently of the others, is (i) a hydrogen atom, (ii) an alkyl group, (iii) an aryl group, (iv) an arylalkyl group, or (v) an alkylaryl group,
wherein R₁ and R₂ can be joined together to form a ring, wherein R₃ and R₄ can be joined together to form a ring, wherein R₅, R₆, R₇, and R₈, each, independently of the others, is (i) a hydrogen atom, (ii) an alkyl group, (iii) an aryl group, (iv) an arylalkyl group, or (v) an alkylaryl group, wherein R₅ and R₆ can be joined together to form a ring, and wherein R₁, R₂, R₃, R₄, R₅, and R₆ can each be joined to a phenyl ring in the central structure, wherein R₉, R₁₀, and R₁₁, are each independently of the others optionally included and wherein if included each R₉, R₁₀, and R₁₁, independently of the others, is (i) a hydroxy group, (ii) a halogen atom, (iii) an amine group, (iv) an imine group, (v) an ammonium group, (vi) a cyano group, (vii) a pyridine group, (viii) a pyridinium group, (ix) an ether group, (x) an aldehyde group, (xi) a ketone group, (xii) an ester group, (xiii) an amide group, (xiv) a carbonyl group, (xv) a thiocarbonyl group, (xvi) a sulfoxide group, (xvii) a nitrile group, (xviii) a mercapto group, (xix) a nitro group, (xx) a nitroso group, (xxi) a sulfone group, (xxii) an acyl group, (xxiii) an acid anhydride group, (xxiv) an azide group, (xxv) an azo group, (xxvi) a cyanato group, (xxvii) an isocyanato group, (xxviii) a thiocyanato group, (xxix) an isothiocyanato group, (xxx) a urethane group, (xxxi) a urea group, or a mixture or combination thereof, wherein two or more substituents can be joined together to form a ring, wherein R₉, R₁₀, and R₁₁ can each be joined to a phenyl ring in the central structure;
wherein a, b and c each, independently of the others, is an integer which is 0, 1, 2, or 3; and
wherein A⁻ is a waxy counter ion comprising a waxy moiety.

2. The use of claim 1, wherein the waxy counter ion is a monomeric waxy counter ion, an oligomeric waxy counter ion, or a polymeric waxy counter ion.

3. The use of claim 1, wherein the waxy counter ion includes an alkylaryl group having from 4 to 150 carbon atoms or an arylalkyl group having from 4 to 150 carbon atoms.

4. The use of claim 1, wherein the waxy counter ion has the formula
R₂₀-(An)_{q}
wherein q is an integer which is 1, 2, 3, 4, 5, or 6, each An, independently of the others, is a carboxylic acid group, a carboxylate group, an organosulfate group, an organosulfonate group, an organosulfinate group, or an organophosphate group; and wherein R₂₀ is an alkyl group, an alkylene group, an aryl group, an arylene group, an arylalkyl group, an arylalkylene group, an alkylaryl group, or an alkylarylene group.

5. The use of claim 1, wherein the waxy counter ion has the formula
A₁₁-R₂₁-A₂₂
wherein A₁₁ and A₂₂ each, independently of the other, are anionic groups; and
wherein R₂₁ is an alkylene group; an arylene group, an arylalkylene group, or an alkylarylene group.

6. The use of claim 1, wherein the compound has the formula

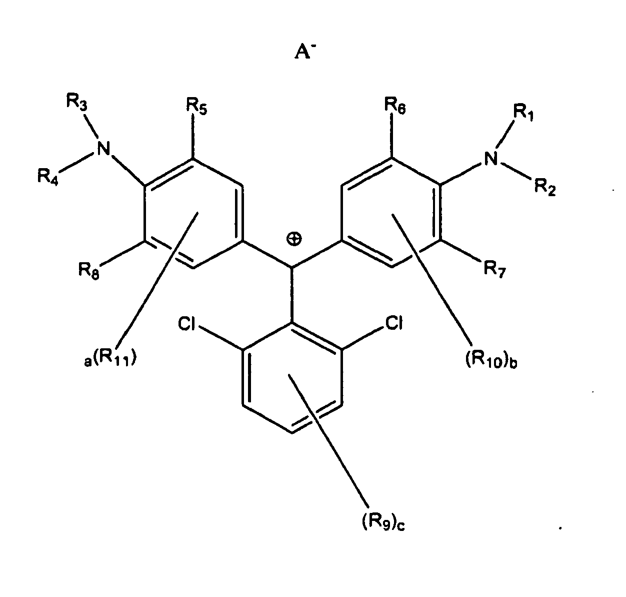

7. The use of claim 1, wherein the compound has the formula

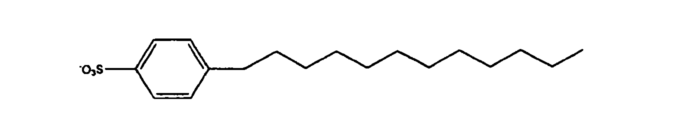

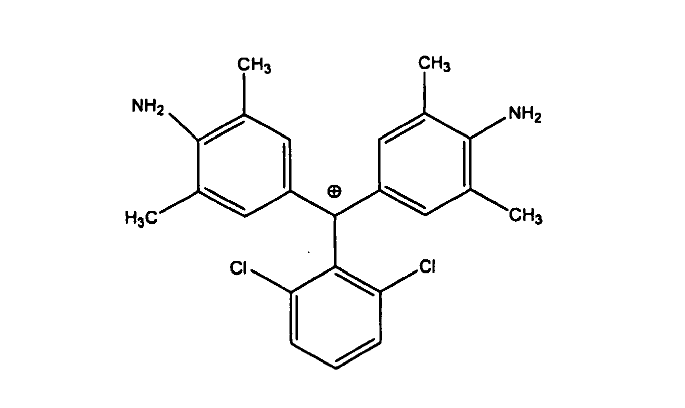

8. The use of claim 1, wherein the compound has the formula

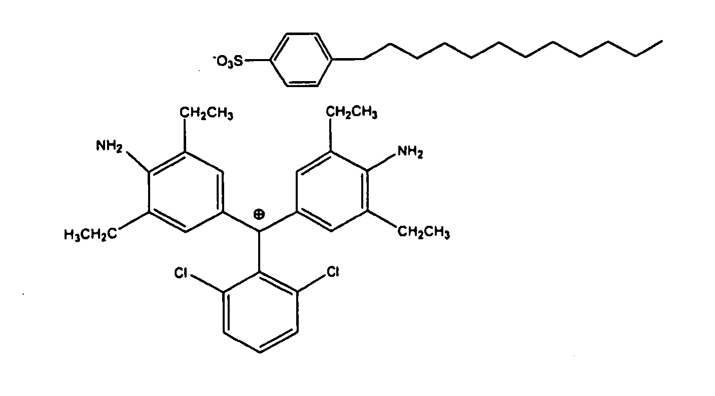

9. The use of claim 1, wherein the compound has the formula

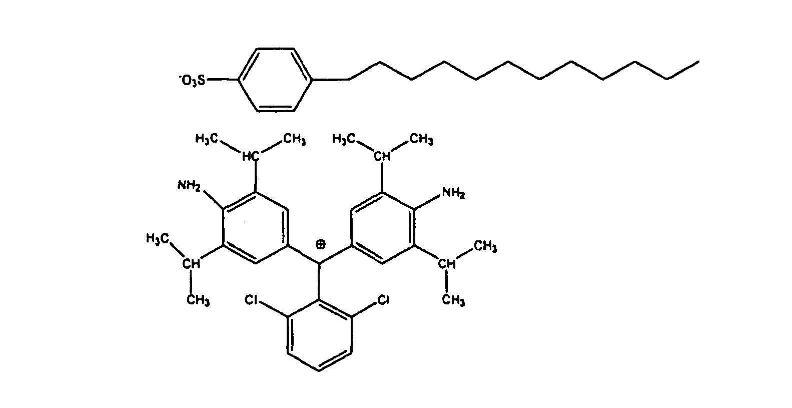

## Patentansprüche

1. Verwendung einer Verbindung der folgenden Formel als Farbstoff in einer Heißschmelz- oder Phasenumwandlungstinte: 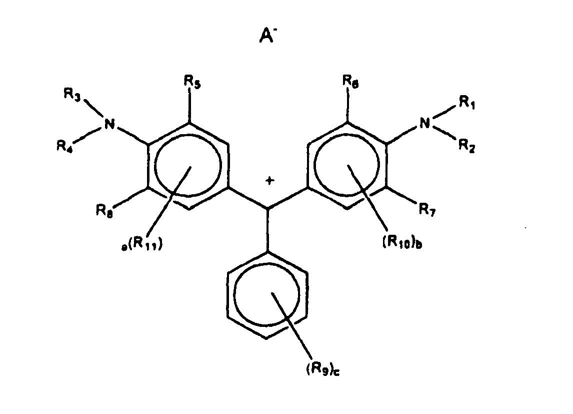 worin R₁, R₂, R₃ und R₄ jeweils unabhängig voneinander (i) ein Wasserstoffatom, (ii) eine Alkylgruppe, (iii) eine Arylgruppe, (iv) eine Arylalkylgruppe oder (v) eine Alkylarylgruppe bedeuten, wobei R₁ und R₂ aneinander gebunden sein können, so dass ein Ring gebildet wird, und wobei R₃ und R₄ aneinander gebunden sein können, so dass ein Ring gebildet wird; R₅, R₆, R₇ und R₈ bedeuten jeweils unabhängig voneinander (i) ein Wasserstoffatom, (ii) eine Alkylgruppe, (iii) eine Arylgruppe, (iv) eine Arylalkylgruppe oder (v) eine Alkylarylgruppe, wobei R₅ und R₆ aneinander gebunden sein können, so dass ein Ring gebildet wird, und wobei R₁, R₂, R₃, R₄, R₅ und R₆ jeweils an einen Phenylring in der Zentralstruktur gebunden sein können; R₉, R₁₀ und R₁₁ sind Reste, die in der Verbindung enthalten sein können, und wenn diese Reste enthalten sind, bedeuten R₉, R₁₀ und R₁₁ jeweils unabhängig voneinander (i) eine Hydroxygruppe, (ii) ein Halogenatom, (iii) eine Amingruppe, (iv) eine Imingruppe, (v) eine Ammoniumgruppe, (vi) eine Cyanogruppe, (vii) eine Pyridingruppe, (viii) eine Pyridiniumgruppe, (ix) eine Ethergruppe, (x) eine Aldehydgruppe, (xi) eine Ketongruppe, (xii) eine Estergruppe, (xiii) eine Amidgruppe, (xiv) eine Carbonylgruppe, (xv) eine Thiocarbonylgruppe, (xvi) eine Sulfoxidgruppe, (xvii) eine Nitrilgruppe, (xviii) eine Mercaptogruppe, (xix) eine Nitrogruppe, (xx) eine Nitrosogruppe, (xxi) eine Sulfongruppe, (xxii) eine Acylgruppe, (xxiii) eine Säureanhydridgruppe, (xxiv) eine Azidgruppe, (xxv) eine Azogruppe, (xxvi) eine Cyanatogruppe, (xxvii) eine Isocyanatogruppe, (xxviii) eine Thiocyanatogruppe, (xxix) eine Isothiocyanatogruppe, (xxx) eine Urethangruppe, (xxxi) eine Harnstoffgruppe, oder ein Gemisch oder eine Kombination davon, wobei zwei oder mehr Substituenten aneinander gebunden sein können, so dass ein Ring gebildet wird, und wobei R₉, R₁₀ und R₁₁ jeweils an einen Phenylring in der Zentralstruktur gebunden sein können;
a, b und c bedeuten jeweils unabhängig voneinander eine ganze Zahl, die 0, 1, 2 oder 3 ist; und
A⁻ ist ein wachsartiges Gegenion, das einen wachsartigen Rest umfasst.

2. Verwendung nach Anspruch 1, wobei das wachsartige Gegenion ein monomeres wachsartiges Gegenion, ein oligomeres wachsartiges Gegenion oder ein polymeres wachsartiges Gegenion ist.

3. Verwendung nach Anspruch 1, wobei das wachsartige Gegenion eine Alkylarylgruppe mit 4 bis 150 Kohlenstoffatomen oder eine Arylalkylgruppe mit 4 bis 150 Kohlenstoffatomen enthält.

4. Verwendung nach Anspruch 1, wobei das wachsartige Gegenion durch die folgende Formel dargestellt wird:
R₂₀-(An)_{q}
worin q eine ganze Zahl ist, die 1, 2, 3, 4, 5 oder 6 ist, die Reste An bedeuten jeweils unabhängig voneinander eine Carbonsäuregruppe, eine Carboxylatgruppe, eine Organosulfatgruppe, eine Organosulfonatgruppe, eine Organosulfinatgruppe oder eine Organophosphatgruppe; und
worin R₂₀ eine Alkylgruppe, eine Alkylengruppe, eine Arylgruppe, eine Arylengruppe, eine Arylalkylgruppe, eine Arylalkylengruppe, eine Alkylarylgruppe oder eine Alkylarylengruppe ist.

5. Verwendung nach Anspruch 1, wobei das wachsartige Gegenion durch die folgende Formel dargestellt wird:
A₁₁-R₂₁-A₂₂
worin A₁₁ und A₂₂ jeweils unabhängig voneinander anionische Gruppen sind; und
R₂₁ ist eine Alkylengruppe, eine Arylengruppe, eine Arylalkylengruppe oder eine Alkylarylengruppe.

6. Verwendung nach Anspruch 1, wobei die Verbindung durch die folgende Formel dargestellt wird:

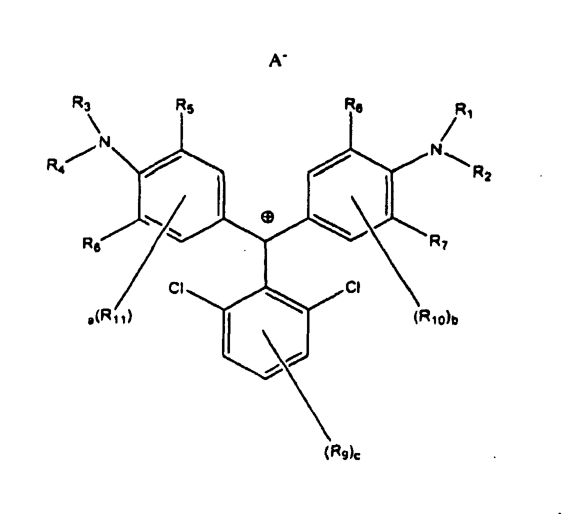

7. Verwendung nach Anspruch 1, wobei die Verbindung durch die folgende Formel dargestellt wird:

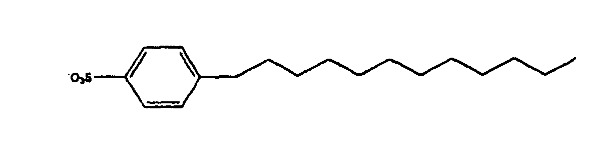

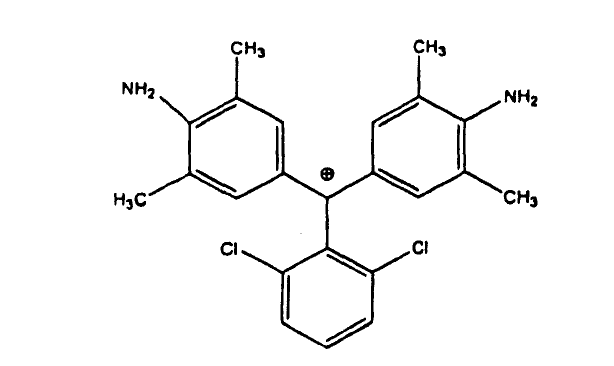

8. Verwendung nach Anspruch 1, wobei die Verbindung durch die folgende Formel dargestellt wird:

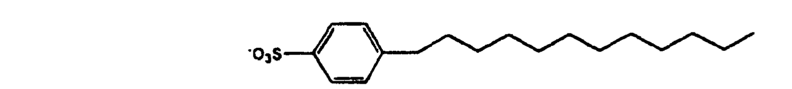

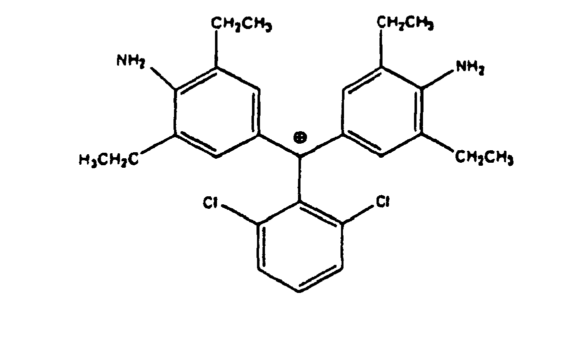

9. Verwendung nach Anspruch 1, wobei die Verbindung durch die folgende Formel dargestellt wird:

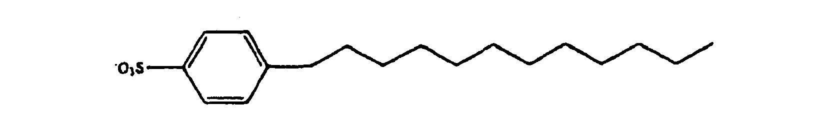

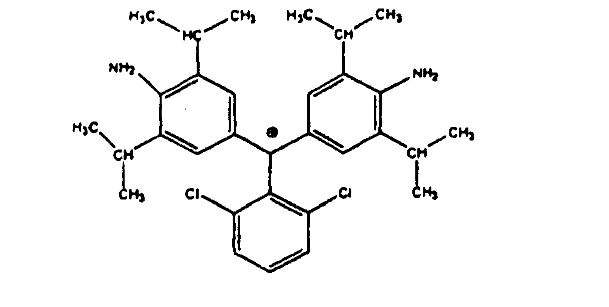

## Revendications

1. Utilisation d'un composé ayant la formule suivante comme matière colorante dans une encre thermofusible ou à changement de phase 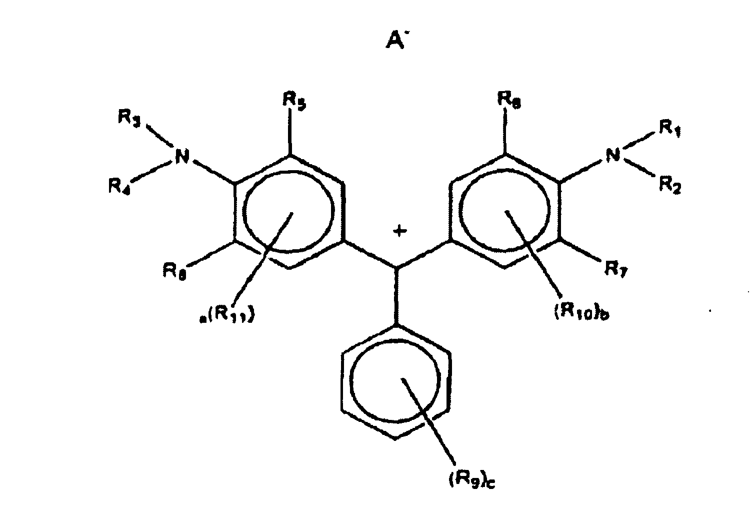 dans laquelle R₁, R₂, R₃, et R₄, chacun indépendamment des autres, est (i) un atome d'hydrogène, (ii) un groupe alkyle, (iii) un groupe aryle, (iv) un groupe arylalkyle, ou (v) un groupe alkylaryle, dans laquelle R₁ et R₂ peuvent être joints ensemble pour former un cycle, dans laquelle R₃ et R₄ peuvent être joints ensemble pour former un cycle, dans laquelle R₅, R₆, R₇, et R₈, chacun indépendamment des autres, est (i) un atome d'hydrogène, (ii) un groupe alkyle, (iii) un groupe aryle, (iv) un groupe arylalkyle, ou (v) un groupe alkylaryle, dans laquelle R₅ et R₆ peuvent être joints ensemble pour former un cycle, et dans laquelle R₁, R₂, R₃, R₄, R₅, et R₆ peuvent chacun être joints à un cycle phényle dans la structure centrale, dans laquelle R₉, R₁₀, et R₁₁ sont chacun indépendamment des autres facultativement inclus et dans laquelle, s'ils sont inclus, chaque R₉, R₁₀, et R₁₁, indépendamment des autres, est (i) un groupe hydroxy, (ii) un atome d'halogène, (iii) un groupe amine, (iv) un groupe imine, (v) un groupe ammonium, (vi) un groupe cyano, (vii) un groupe pyridine, (viii) un groupe pyridinium, (ix) un groupe éther, (x) un groupe aldéhyde, (xi) un groupe cétone, (xii) un groupe ester, (xiii) un groupe amide, (xiv) un groupe carbonyle, (xv) un groupe thiocarbonyle, (xvi) un groupe sulfoxyde, (xvii) un groupe nitrile, (xviii) un groupe mercapto, (xix) un groupe nitro, (xx) un groupe nitroso, (xxi) un groupe sulfone, (xxii) un groupe acyle, (xxiii) un groupe anhydride d'acide, (xxiv) un groupe azide, (xxv) un groupe azo, (xxvi) un groupe cyanato, (xxvii) un groupe isocyanato, (xxviii) un groupe thiocyanato, (xxix) un groupe isothiocyanato, (xxx) un groupe uréthane, (xxxi) un groupe urée, ou un mélange ou une combinaison de ceux-ci, dans lesquels deux substituants ou plus peuvent être joints ensemble pour former un cycle, dans laquelle R₉, R₁₀, et R₁₁ peuvent chacun être joints à un cycle phényle dans la structure centrale ;
dans laquelle a, b et c, chacun indépendamment des autres, est un entier qui vaut 0, 1, 2, ou 3 ; et
dans laquelle A⁻ est un contre-ion cireux comprenant un groupe caractéristique cireux.

2. Utilisation selon la revendication 1, dans laquelle le contre-ion cireux est un contre-ion cireux monomérique, un contre-ion cireux oligomérique, ou un contre-ion cireux polymérique.

3. Utilisation selon la revendication 1, dans laquelle le contre-ion cireux inclut un groupe alkylaryle ayant de 4 à 150 atomes de carbone ou un groupe arylalkyle ayant de 4 à 150 atomes de carbone.

4. Utilisation selon la revendication 1, dans laquelle le contre-ion cireux a la formule
R₂₀-(An)_{q}
dans laquelle q est un entier qui vaut 1, 2, 3, 4, 5, ou 6, chaque An, indépendamment des autres, est un groupe acide carboxylique, un groupe carboxylate, un groupe organosulfate, un groupe organosulfonate, un groupe organosulfinate, ou un groupe organophosphate ; et
dans laquelle R₂₀ est un groupe alkyle, un groupe alkylène, un groupe aryle, un groupe arylène, un groupe arylalkyle, un groupe arylalkylène, un groupe alkylaryle, ou un groupe alkylarylène.

5. Utilisation selon la revendication 1, dans laquelle le contre-ion cireux a la formule
A₁₁-R₂₁-A₂₂
dans laquelle A₁₁ et A₂₂, chacun indépendamment de l'autre sont des groupes anioniques ; et
dans laquelle R₂₁ est un groupe alkylène, un groupe arylène, un groupe arylalkylène, ou un groupe alkylarylène.

6. Utilisation selon la revendication 1, dans laquelle le composé a la formule

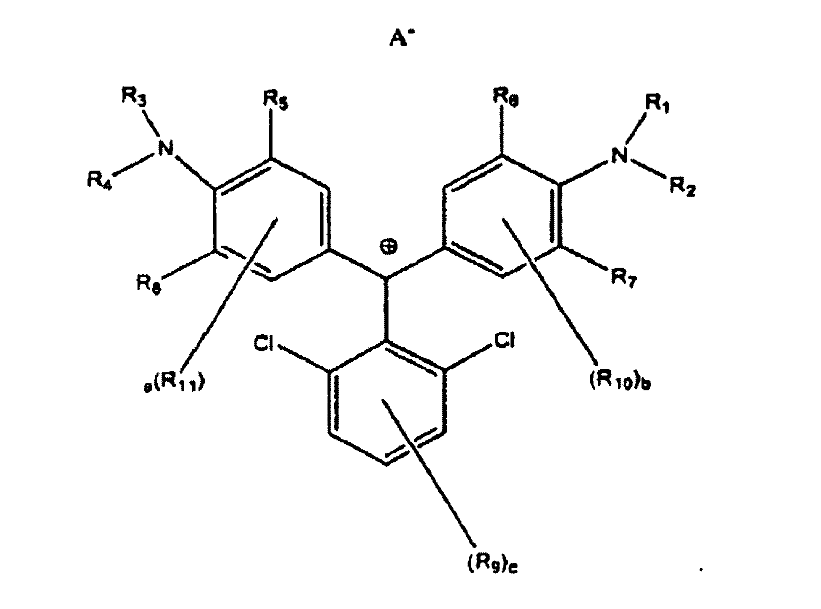

7. Utilisation selon la revendication 1, dans laquelle le composé a la formule

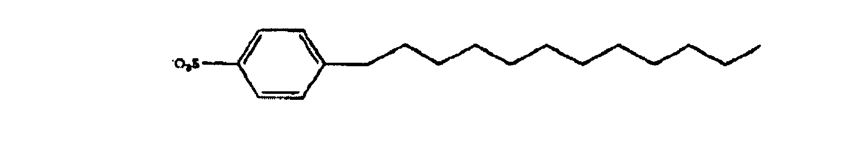

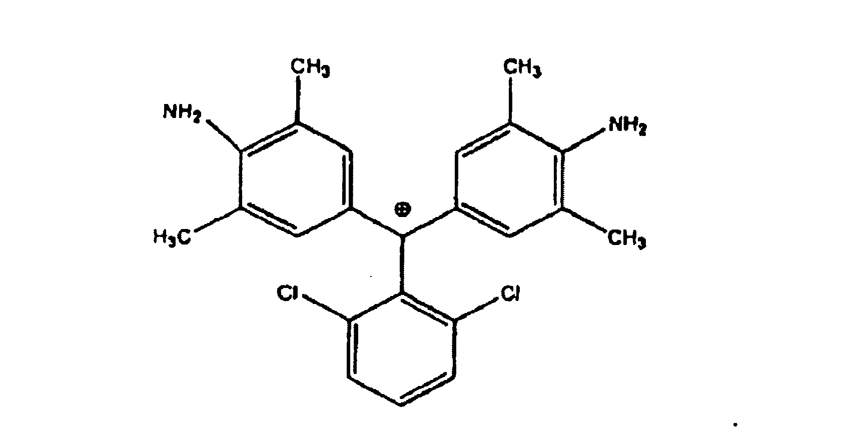

8. Utilisation selon la revendication 1, dans laquelle le composé a la formule

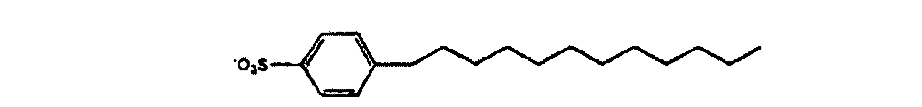

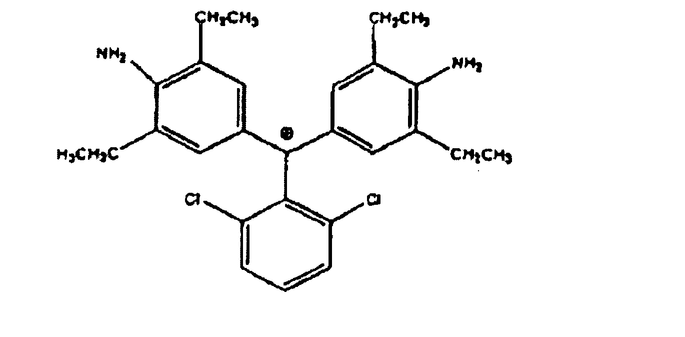

9. Utilisation selon la revendication 1, dans laquelle le composé a la formule
